# FASCICULE DE BREVET EUROPEEN

(11) **EP 4 499 508 B1**
(45) Date de publication et mention de la délivrance du brevet: **03.12.2025**
(21) Numéro de dépôt: 23711523.3
(22) Date de dépôt: 01.03.2023
(51) Int. Cl.: B64G 1/24, B64G 1/52

(54) **PROCÉDÉ POUR UN CONTRÔLE D'ORBITE AUTONOME ET SATELLITE CONFIGURÉ POUR LA MISE EN OEUVRE DU PROCÉDÉ**
VERFAHREN ZUR AUTONOMEN ORBIT-STEUERUNG UND SATELLIT MIT KONFIGURATION ZUR IMPLEMENTIERUNG DES VERFAHRENS
METHOD FOR AUTONOMOUS ORBIT CONTROL AND SATELLITE CONFIGURED TO IMPLEMENT THE METHOD

(30) Priorité: 24.03.2022 FR 2202601
(43) Date de publication de la demande: 05.02.2025
(73) Titulaire: Centre National d'Études Spatiales, 75039 Paris Cedex 01 (FR)
(72) Inventeur: THOMASSIN, Jérôme, 31290 VILLEFRANCE DE LAURAGAIS (FR)
(74) Mandataire: Germain Maureau
(86) Numéro de dépôt international: PCT/FR2023/050274
(87) Numéro de publication internationale: WO 2023/180646

(56) Documents cités:
- US-A1- 2008 033 648
- US-A1- 2013 292 517
- RUSCONI CHIARA MARIA PAOLA: "ASTERIA: Integration of Risk Collision Management in Autonomous Orbit Control", MASTER THESIS ID NUMBER 899854, 1 December 2020 (2020-12-01), pages 1 - 99, XP055970141, Retrieved from the Internet <URL:https://www.politesi.polimi.it/bitstream/10589/170342/3/TESI_ChiaraRusconi.pdf> [retrieved on 20221011]
- THOMASSIN JÉRÔME ET AL: "Predictive Autonomous Orbit Control Method for Low Earth Orbit Satellites", PAPER, INTERNATIONAL SYMPOSIUM ON SPACE FLIGHT DYNAMICS, MATSUYAMA, JAPAN, JUNE. 2017., 1 June 2017 (2017-06-01), pages 1 - 6, XP055970156, Retrieved from the Internet <URL:https://issfd.org/ISSFD_2017/paper/ISTS-2017-d-086__ISSFD-2017-086.pdf> [retrieved on 20221011]
- HOBBS KERIANNE L ET AL: "Formal Specification and Analysis of Spacecraft Collision Avoidance Run Time Assurance Requirements", 2021 IEEE AEROSPACE CONFERENCE (50100), IEEE, 6 March 2021 (2021-03-06), pages 1 - 16, XP033922857, DOI: 10.1109/AERO50100.2021.9438135

## Description

La présente invention concerne le domaine du contrôle d'orbite autonome et en particulier de la gestion des risques de collision.

Il est connu de déléguer au système satellite bord le contrôle d'orbite autonome, i.e. la planification et la réalisation des corrections orbitales permettant de se maintenir sur l'orbite de la mission du satellite.

Le maintien à poste sur des orbites basses par la mise en œuvre d'un contrôle d'orbite autonome implique la réalisation de manœuvres de contrôle d'orbite fréquentes et non prédictibles par le sol. Elles sont en effet calculées et réalisées de façon autonome par le bord et avec une anticipation courte ne permettant pas la prise en compte du plan de manœuvres par le segment sol. L'orbite précise suivie par le satellite n'est donc pas formellement connue au sol, seule la tenue de sa fenêtre de maintien à poste est garantie.

Avec un contrôle d'orbite autonome en orbite basse, la fenêtre de maintien à poste est étroite. Le contrôle d'orbite autonome s'asservit finement autour de son orbite de guidage. A ce titre, les manœuvres de maintien à poste sont fréquentes et petites, particulièrement à basse altitude. La conséquence est une forte sensibilité du contrôle aux variations de la dynamique orbitale dues aux perturbations. En particulier, pour les orbites très basses, le frottement atmosphérique est une force prépondérante fortement dépendante de l'activité solaire. Sur des courtes périodes, l'activité solaire est fluctuante et peu prédictible. A ce titre, le COA ne sait pas anticiper son besoin de correction sur un horizon temporel trop long et doit être réactif. Par exemple, le besoin de réactivité est de l'ordre de 2 à 3 orbites pour un satellite sur une orbite à 500 km.

La gestion habituelle des risques de collision par le segment sol apparaît fortement contrainte de par la méconnaissance de cette trajectoire future et par les temps de réaction et de latence différents entre le système bord et cette gestion par le sol.

Le document "Rusconi Chiara Maria Paola: ASTERIA: Integration of Risk Collision Management in Autonomous Orbit Control, Master Thesis, ID Number 899854, 1 décembre 2020 (2020-12-01), pages 1-99, XP055970141 " divulgue un système pour un contrôle d'orbite autonome d'un satellite.

L'invention a donc pour but de proposer une solution à tout ou partie de ces problèmes.

A cet effet, la présente invention concerne un procédé pour un contrôle d'orbite autonome d'un satellite intégrant à bord du satellite un maintien à poste du satellite et un évitement d'une collision du satellite avec au moins un objet spatial, le procédé comprenant les étapes suivantes :
- activation du procédé à un instant d'activation;
- utilisation d'un précédent plan de manœuvres déterminé sur un précédent horizon de prédiction pour garantir le maintien à poste du satellite et/ou la gestion des risques de collision, le précédent plan de manœuvres comprenant au moins une précédente manœuvre, l'au moins une précédente manœuvre étant définie pour être mise en œuvre à une date à l'intérieur du précédent horizon de prédiction du précédent plan de manœuvres, le précédent horizon de prédiction comprenant une précédente partie figée comprise entre un début du précédent horizon de prédiction et une fin de la précédente partie figée, le précédent plan de manœuvres étant l'un parmi un plan de manœuvres déterminé sur le précédent horizon de prédiction, un nouveau plan de manœuvres déterminé sur le précédent horizon de prédiction, un autre plan de manœuvres déterminé sur le précédent horizon de prédiction, ou le précédent plan de manœuvres comprenant un plan de manœuvres d'évitement déterminé sur un précédent horizon d'évitement,
- si le précédent plan de manœuvres comprend un plan de manœuvres d'évitement déterminé sur un précédent horizon d'évitement, et si une fin dudit précédent horizon d'évitement est antérieure à la fin de la précédente partie figée, ou si le précédent plan de manœuvres n'est pas un plan de manœuvres d'évitement, les étapes suivantes sont mises en œuvre:
   - détermination d'un plan de manœuvres sur un horizon de prédiction pour garantir le maintien à poste du satellite, ledit plan de manœuvres comprenant au moins une précédente manœuvre du précédent plan de manœuvres si l'au moins une précédente manœuvre est définie pour être mise en œuvre à une date à l'intérieur de la précédente partie figée et à l'intérieur de l'horizon de prédiction du plan de manœuvres, l'horizon de prédiction ayant une durée égale à la durée du précédent horizon de prédiction, un début de l'horizon de prédiction étant décalé dans le temps par rapport au début du précédent horizon de prédiction, le décalage dans le temps étant égal à un délai d'activation, le plan de manœuvres comprenant en outre au moins
      une manœuvre, l'au moins une manœuvre étant définie pour être mise en œuvre pendant une partie calculée de l'horizon de prédiction comprise entre la fin de la précédente partie figée et la fin de l'horizon de prédiction, le plan de manœuvres étant déterminé en fonction de créneaux autorisés sur l'horizon de prédiction par un programme de mission du satellite;
   - identification, pour une trajectoire correspondant à une exécution du plan de manœuvres déterminé, d'un risque identifié de collision avec l'au moins un objet spatial et détermination d'un niveau de risque de collision avec l'au moins un objet spatial ;
   - si le niveau de risque est inférieur ou égal à un seuil prédéterminé, transmission du plan de manœuvres à un système de commande de propulsion et de contrôle d'attitude du satellite pour exécution des manœuvres de la précédente partie figée, l'étape de transmission comprenant une étape de sauvegarde, dans laquelle le plan de manœuvres devient le précédent plan de manœuvres ;
   - si le niveau de risque est supérieur au seuil prédéterminé:
   - détermination d'un nouveau plan de manœuvres sur l'horizon de prédiction pour garantir le maintien à poste du satellite, ledit nouveau plan de manœuvres comprenant au moins une précédente manœuvre du précédent plan de manœuvres si l'au moins une précédente manœuvre est définie pour être mise en œuvre à une date à l'intérieur du précédent horizon de prédiction et à l'intérieur de l'horizon de prédiction du nouveau plan de manœuvres, le nouveau plan de manœuvres comprenant en outre au moins une nouvelle manœuvre, l'au moins une nouvelle manœuvre étant définie pour être mise en œuvre sur une nouvelle partie calculée de l'horizon de prédiction comprise entre la fin du précédent plan de manœuvres et la fin de l'horizon de prédiction, le nouveau plan de manœuvres étant déterminé en fonction de créneaux autorisés sur l'horizon de prédiction par un précédent programme de mission du satellite;
   - identification, pour une nouvelle trajectoire correspondant à une exécution du nouveau plan de manœuvres déterminé, d'un nouveau risque identifié de collision avec au moins un nouvel objet spatial et détermination d'un nouveau niveau de risque de collision avec l'au moins un nouvel objet spatial, l'au moins un nouvel objet et l'au moins un objet pouvant être identiques;
   - si le nouveau niveau de risque est inférieur ou égal à un nouveau seuil prédéterminé, transmission du nouveau plan de manœuvres au système de commande de propulsion et de contrôle d'attitude du satellite pour exécution des manœuvres de la précédente partie figée, l'étape de transmission comprenant une étape de sauvegarde, dans laquelle le nouveau plan de manœuvres devient le précédent plan de manœuvres;
   - activation du procédé au moins une fois à un instant d'activation suivant, l'instant d'activation suivant étant l'instant d'activation décalé du délai d'activation.

Selon ces dispositions, les manœuvres du plan de manœuvres sont calculées sur un horizon de prédiction de manière à obtenir un niveau de risque de collision acceptable sur la base des conjonctions connues à l'instant d'activation considéré, en assurant le maintien à poste pour la mission, dans le cas où il n'y pas de risque de collision identifié.

Selon un mode de mise en œuvre, l'invention comprend une ou plusieurs des caractéristiques suivantes, seules ou en combinaison techniquement acceptable. Selon un mode de mise en œuvre, l'instant d'activation du procédé est un instant de passage du satellite au nœud ascendant de l'orbite du satellite.

Selon un mode de mise en œuvre, le procédé comprend en outre les étapes suivantes, si le nouveau niveau de risque est supérieur au seuil prédéterminé:
- détermination d'un autre plan de manœuvres sur l'horizon de prédiction, l'autre plan de manœuvres comprenant seulement l'au moins une précédente manœuvre du précédent plan de manœuvres si l'au moins
   une précédente manœuvre est définie pour être mise en œuvre à une date à l'intérieur de la précédente partie figée et à l'intérieur de l'horizon de prédiction dudit autre plan de manœuvres , l'autre plan de manœuvres ne comprenant aucune manœuvre si l'au moins une précédente manœuvre n'est pas définie pour être mise en œuvre pendant la précédente partie figée et à l'intérieur de horizon de prédiction;
- identification, pour une autre trajectoire correspondant à une exécution de l'autre plan de manœuvres, d'un autre risque identifié de collision avec au moins un autre objet spatial et détermination d'un autre niveau de risque de collision avec l'au moins un autre objet spatial, l'au moins un autre objet spatial et l'au moins un objet spatial pouvant être identiques;
- si l'autre niveau de risque est inférieur ou égal à un autre seuil prédéterminé, transmission de l'autre plan de manœuvres au système de commande de propulsion et de contrôle d'attitude du satellite pour exécution des manœuvres de la précédente partie figée, l'étape de transmission comprenant une étape de sauvegarde, dans laquelle l'autre plan de manœuvres devient le précédent plan de manœuvres;

Selon ces dispositions, si la modification de la trajectoire ne permet pas de réduire le risque de collision à un niveau acceptable, l'autre plan de manœuvres sans manœuvres calculées permet d'obtenir une trajectoire pouvant servir de base de référence pour une détermination de manœuvres d'évitements spécifiques. Les manœuvres de l'autre plan de manœuvres ne sont pas calculées et ne garantissent donc plus la réalisation du maintien à poste de manière à proposer une solution calculatoire rapide permettant une modification substantielle de la trajectoire afin de modifier le risque de collision identifié.

Selon un mode de mise en œuvre, le procédé comprend en outre les étapes suivantes, si l'autre niveau de risque est supérieur à l'autre seuil prédéterminé:
- détermination d'un plan de manœuvres d'évitement sur un horizon d'évitement, le plan de manœuvres d'évitement comprenant l'au moins une précédente manœuvre du précédent plan de manœuvres si l'au moins
   une précédente manœuvre est définie pour être mise en œuvre pendant la précédente partie figée du précédent horizon de prédiction, le plan de manœuvres d'évitement comprenant en outre au moins une manœuvre d'évitement pour éviter la collision avec l'autre objet spatial;
- transmission du plan de manœuvres d'évitement au système de commande de propulsion et de contrôle d'attitude du satellite pour exécution des manœuvres de la précédente partie figée, l'étape de transmission comprenant une étape de sauvegarde, dans laquelle le plan de manœuvres d'évitement et une partie sans manœuvre comprise entre une fin de l'horizon d'évitement et la fin de l'horizon de prédiction deviennent ensemble le précédent plan de manœuvres.

Selon ces dispositions, les manœuvres du plan de manœuvres sont calculées sur un horizon de prédiction de manière à garantir un niveau de risque de collision acceptable sur la base des conjonctions connues à l'instant d'activation considéré, en assurant un évitement des collisions identifiées pénalisant le moins possible la mission.

Selon un mode de mise en œuvre, le plan de manœuvres d'évitement est déterminé en utilisant des créneaux prioritaires autorisés par le programme de mission du satellite.

Selon un mode de mise en œuvre, un début de l'horizon d'évitement coïncide avec le début de l'horizon de prédiction, et dans lequel une fin de l'horizon d'évitement est déterminée en fonction d'un instant de plus petit rapprochement du satellite avec l'autre objet spatial.

Selon un mode de mise en œuvre, la fin de l'horizon d'évitement est l'instant de plus petit rapprochement du satellite avec l'autre objet spatial, augmenté d'une période de temps prédéterminée, les créneaux prioritaires utilisés pour l'au moins une manœuvre d'évitement étant positionnés avant l'instant de plus petit rapprochement du satellite avec l'autre objet spatial, des créneaux complémentaires étant positionnés sur la période de temps prédéterminée pour des manœuvres complémentaires destinées à assurer un retour du satellite sur une orbite de référence.

Selon un mode de mise en œuvre, les créneaux prioritaires autorisés pour la détermination du plan de manœuvres d'évitement sont déterminés en fonction des créneaux autorisés sur l'horizon de prédiction par le programme de mission pour favoriser le maintien à poste et en fonction d'autres créneaux autorisés par un autre programme de mission défini pour favoriser l'évitement.

Selon un mode de mise en œuvre, les autres créneaux autorisés par l'autre programme de mission comprennent les créneaux complémentaires autorisés pour les manœuvres complémentaires destinées à assurer le retour du satellite sur l'orbite de référence.

Selon un mode de mise en œuvre, le procédé comprend le programme de mission nominal et l'autre programme de mission comprennent une période de reprise commune comprise entre un premier instant de reprise et un deuxième instant de reprise, les créneaux alloués pour la détermination du plan de manœuvres d'évitement étant les créneaux de l'autre programme de mission qui sont compris dans la période de reprise, et les créneaux du programme de mission nominal qui ne sont pas compris dans la période de reprise.

Selon un mode de mise en œuvre, le procédé comprend en outre les étapes suivantes, si le précédent plan de manœuvres, sauvegardé suite à l'activation du procédé, comprend un plan de manœuvres d'évitement déterminé sur un précédent horizon d'évitement, et si la fin dudit précédent horizon d'évitement est postérieure à la fin de la précédente partie figée dudit précédent plan de manœuvres:
- mise à jour, pour une trajectoire correspondant à une exécution du précédent plan de manœuvres déterminé, d'un risque identifié de collision avec l'au moins un objet spatial et détermination d'un niveau de risque de collision avec l'au moins un objet spatial ;
- détermination d'un plan de manœuvres d'évitement sur un autre horizon d'évitement ;
- détermination d'un plan de manœuvres sur une autre partie calculée de l'horizon de prédiction, l'autre partie calculée étant comprise entre la fin de l'autre horizon d'évitement et la fin de l'horizon de prédiction,
- transmission du plan de manœuvres d'évitement et du plan de manœuvres au système de commande de propulsion et de contrôle d'attitude du satellite pour exécution des manœuvres de la précédente partie figée, l'étape de transmission comprenant une étape de sauvegarde, dans laquelle le plan de manœuvres d'évitement et le plan de manœuvres deviennent ensemble le précédent plan de manœuvres.

Selon un mode de mise en œuvre, le délai d'activation est égale à une durée d'une orbite du satellite.

Selon un mode de mise en œuvre, la durée de l'horizon de prédiction est égale à une durée d'au moins 3 orbites successives du satellite.

Selon un mode de mise en œuvre la durée de l'horizon de prédiction est égale à une durée d'un nombre d'orbites successives, le nombre d'orbites successives étant compris entre 10 et 20, le nombre d'orbites successives étant de préférence égale à 14 ou 15.

Selon un mode de mise en œuvre, la durée de la précédente partie figée (PPF) est égale à une durée de 3 orbites successives du satellite.

Selon un aspect, l'invention concerne également un satellite comprenant un dispositif de contrôle d'orbite autonome, le dispositif étant configuré pour assurer de manière autonome à bord du satellite une fonction de maintien à poste du satellite et une fonction d'évitement d'une collision du satellite avec au moins un objet spatial, le satellite comprenant :
- un équipement configuré pour activer le dispositif à un instant d'activation le dispositif comprenant :
- un moyen de détermination d'un plan de manœuvres configuré pour garantir le maintier
à poste du satellite, le plan de manœuvres comprenant au moins une manœuvre, l'au moins une manœuvre étant définie pour être mise en œuvre à une date à l'intérieur d'un horizon de prédiction du plan de manœuvres, l'horizon de prédiction ayant une durée comprise entre un début de l'horizon de prédiction correspondant à l'instant d'activation et une fin de l'horizon de prédiction, le plan de manœuvres étant déterminé par ledit moyen de détermination à partir d'ur précédent plan de manœuvres comprenant au moins une précédente manœuvre, l'au moins une précédente manœuvre étant définie pour être mise en œuvre à une date à l'intérieur d'un précédent horizon de prédiction du précédent plan de manœuvres, le précédent horizon de prédiction ayant une durée égale à la durée de l'horizon de prédiction, le début de l'horizon de prédiction étant décalé dans le temps par rapport à un début du précédent horizon de prédiction, le décalage dans le temps étant égal à un délai d'activation, l'horizon de prédiction comprenant une partie figée comprise entre le début de l'horizon de prédiction et une fin de la première figée, et une partie calculée comprise entre la fin de la partie figée et la fin de l'horizon de prédiction, le plan de manœuvres étant déterminé par ledit moyen de détermination en fonction de créneaux autorisés sur l'horizor
de prédiction par un programme de mission, l'au moins une manœuvre du plan de manœuvres comprenant l'au moins une précédente manœuvre du précédent plan de manœuvres si l'au moins une précédente manœuvre est définie pour être mise en œuvre pendant la partie figée de l'horizon de prédiction;
- un moyen d'identification d'un risque identifié de collision avec l'au moins un objet spatial et détermination d'un niveau de risque de collision avec l'au moins un objet spatial ;
- un moyen de vérification si le niveau de risque est inférieur ou égal à un seuil prédéterminé ;
- un moyen transmission configuré pour transmettre le plan de manœuvres à un système de commande de propulsion et de contrôle d'attitude du satellite et pour sauvegarder le plan de manœuvres de sorte que le plan de manœuvres devient le précédent plan de manœuvres si le niveau de risque est inférieur ou égal à un seuil prédéterminé ;
- le moyen de détermination étant configuré, si le niveau de risque est supérieur au seuil prédéterminé, pour déterminer un nouveau plan de manœuvres, le nouveau plan de manœuvres comprenant l'au moins une
   précédente manœuvre du précédent plan de manœuvres si l'au moins une précédente manœuvre est définie pour être mise en œuvre à une date à l'intérieur du précédent horizon de prédiction et à l'intérieur de l'horizon de prédiction;
- le moyen d'identification étant configuré pour identifier un nouveau risque de collision avec au moins un nouvel objet spatial et pour déterminer un nouveau niveau de risque de collision avec l'au moins un nouvel objet spatial;
- le moyen de vérification étant configuré pour vérifier si le nouveau niveau de risque est inférieur ou égal à un nouveau seuil prédéterminé ;
- le moyen de transmission étant configuré pour transmettre le nouveau plan de manœuvres au système de commande de propulsion et de contrôle d'attitude du satellite et pour sauvegarder le nouveau plan de manœuvres de sorte que le nouveau plan de manœuvres devient le précédent plan de manœuvres, si le nouveau niveau de risque est inférieur ou égal à un nouveau seuil prédéterminé:
- le moyen de détermination étant configuré pour déterminer une trajectoire sans manœuvre si le nouveau niveau de risque est supérieur au seuil prédéterminé;
- le moyen d'identification étant configuré pour identifier un autre risque de collision avec au moins un autre objet spatial et pour déterminer un autre niveau de risque de collision avec l'au moins un autre objet spatial;
- le moyen de vérification étant configuré pour vérifier si l'autre niveau de risque est inférieur ou égal à un autre seuil prédéterminé ;
- le moyen transmission étant configuré pour transmettre l'autre plan de manœuvres au système de commande de propulsion et de contrôle d'attitude du satellite et pour sauvegarder l'autre plan de manœuvres de sorte que l'autre plan de manœuvres devient le précédent plan de manœuvres, si l'autre niveau de risque est inférieur ou égal à un autre seuil prédéterminé;
- le moyen de détermination étant configuré pour déterminer un plan de manœuvres d'évitement si le niveau de risque est supérieur à l'autre seuil prédéterminé, le plan de manœuvres d'évitement comprenant au moins une manœuvre d'évitement pour éviter la collision avec l'autre objet spatial, en utilisant des créneaux prioritaires.
- le moyen de transmission étant configuré pour transmettre le plan de manœuvres d'évitement au système de commande de propulsion et de contrôle d'attitude du satellite et pour sauvegarder le plan de manœuvres d'évitement de sorte que le plan de manœuvres d'évitement et une partie sans manœuvre deviennent le précédent plan de manœuvres.

Selon un mode de réalisation, le satellite comprend en outre un moyen de vérification du contenu du précédent plan de manœuvre, de sorte que le moyen d'identification est configuré pour mettre à jour, pour une trajectoire correspondant à une exécution du précédent plan de manœuvres déterminé, un risque identifié de collision avec l'au moins un objet spatial et détermination d'un niveau de risque de collision avec l'au moins un objet spatial, et le moyen de détermination est configuré pour déterminer un plan de manœuvres d'évitement sur un autre horizon d'évitement, et pour déterminer un plan de manœuvres sur une autre partie calculée de l'horizon de prédiction comprise entre la fin de l'autre horizon d'évitement et la fin de l'horizon de prédiction, et le moyen de transmission est configuré pour transmettre le plan de manœuvres d'évitement et le plan de manœuvres au système de commande de propulsion et de contrôle d'attitude du satellite pour exécution des manœuvres de la précédente partie figée, et pour sauvegarder ledit plan de manœuvres d'évitement et ledit plan de manœuvre, si le précédent plan de manœuvres comprend un plan de manœuvres d'évitement déterminé sur un précédent horizon d'évitement, et si la fin dudit précédent horizon d'évitement est postérieure à la fin de la précédente partie figée dudit précédent plan de manœuvre.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.
[Fig. 1] est une représentation selon un axe du temps d'une succession de passage d'un satellite au nœud ascendant de l'orbite, correspondant à la succession des activations du procédé selon l'invention pour le contrôle d'orbite autonome.
[Fig. 2] est une autre représentation selon un axe du temps d'une autre succession des activations du procédé selon l'invention pour le contrôle d'orbite autonome, dans laquelle un passage d'un satellite au nœud ascendant de l'orbite ne donne pas lieu à une activation car l'activation précédente n'est pas terminée.
[Fig. 3] est une représentation selon un axe du temps d'un plan de manœuvres déterminé sur un horizon de prédiction au cours d'une première étape du procédé selon l'invention.
[Fig. 4] est une autre représentation selon un axe du temps de trois plans de manœuvres déterminés successivement sur un horizon de prédiction glissant au cours d'une première étape du procédé selon l'invention.
[Fig. 5] est une autre représentation selon un axe du temps d'un précédent plan de manœuvres déterminé sur un précédent horizon de prédiction au cours d'une étape du procédé selon l'invention, et du nouveau plan de manœuvres déterminé sur un horizon de prédiction au cours d'une autre étape du procédé selon l'invention, après la détection d'un risque de collision avec le plan de manœuvres déterminé sur l'horizon de prédiction au cours d'une étape précédente du procédé selon l'invention.
[Fig. 6] est une autre représentation selon un axe du temps d'un précédent plan de manœuvres déterminé sur un précédent horizon de prédiction au cours d'une étape du procédé selon l'invention, et d'un autre plan de manœuvres déterminé sur un horizon de prédiction au cours d'une autre étape du procédé selon l'invention, après la détection d'un risque de collision avec le nouveau plan de manœuvres déterminé sur l'horizon de prédiction au cours d'une étape précédente du procédé selon l'invention.
[Fig. 7] est une autre représentation selon un axe du temps d'un plan de manœuvres déterminé sur un horizon de prédiction qui devient un précédent plan de manœuvres déterminé sur un précédent horizon de prédiction au cours d'une étape de sauvegarde.

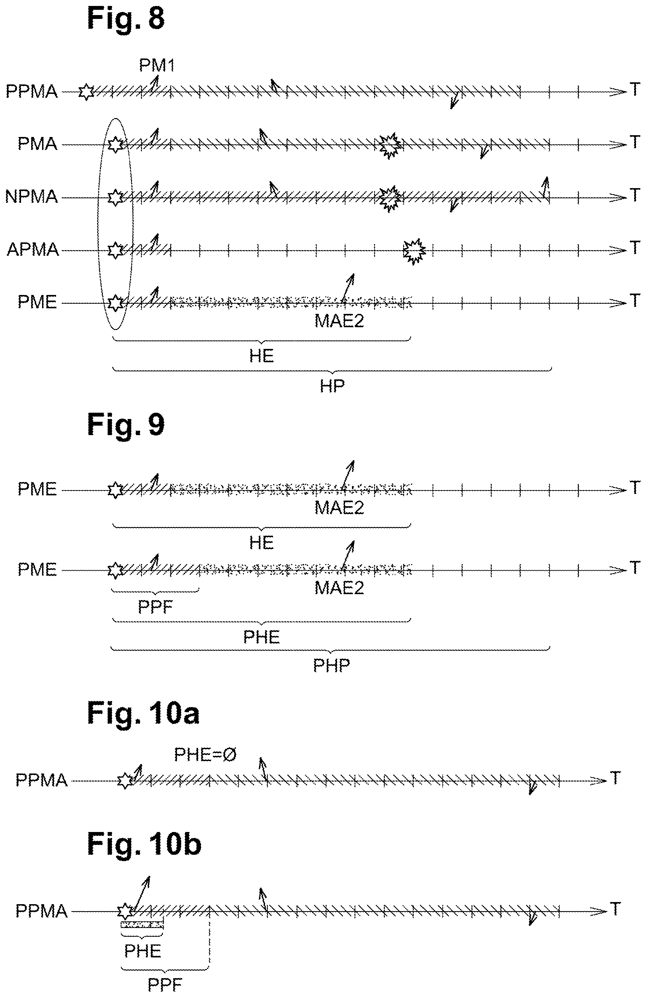

[Fig. 8] est une autre représentation selon un axe du temps d'un précédent plan de manœuvres déterminé sur un précédent horizon de prédiction au cours d'une étape du procédé selon l'invention, et d'un plan de manœuvres d'évitement déterminé sur un horizon d'évitement, associé à un plan de manœuvres déterminé sur un horizon de prédiction au cours d'une autre étape du procédé selon l'invention, après la détection d'un risque de collision avec le nouveau plan de manœuvres et avec l'autre plan de manœuvres sans manœuvre déterminé sur l'horizon de prédiction, au cours d'une étape précédente du procédé selon l'invention.
[Fig. 9] est une autre représentation selon un axe du temps d'un plan de manœuvres d'évitement déterminé sur un horizon d'évitement qui devient un précédent plan de manœuvres déterminé sur un précédent horizon de prédiction au cours d'une autre étape de sauvegarde après une étape de détermination d'un plan de manœuvres d'évitement.
[Fig. 10a] est une représentation selon un axe du temps d'un premier cas de précédent plan de manœuvres, qui conditionne le séquencement des étapes du procédé selon un mode de mise en œuvre de l'invention.
[Fig. 10b] est une représentation selon un axe du temps d'un deuxième cas de précédent plan de manœuvres, qui conditionne le séquencement des étapes du procédé selon un mode de mise en œuvre de l'invention.
[Fig. 10c] est une représentation selon un axe du temps d'un troisième cas de précédent plan de manœuvres, qui conditionne le séquencement des étapes du procédé selon un mode de mise en œuvre de l'invention.
[Fig. 11] est une représentation selon un axe du temps d'un précédent plan de manœuvres selon le troisième cas représenté sur la figure 10c, et d'un plan de manœuvres d'évitement déterminé sur un autre horizon d'évitement, associé à un plan de manœuvres déterminé sur un horizon de prédiction comprenant une autre partie calculée qui commence à la fin de l'autre horizon de prédiction.
[Fig. 12] est un diagramme du séquencement des étapes du procédé selon un mode de mise en œuvre de l'invention correspondant à la revendication indépendante.
[Fig. 13] est un autre diagramme du séquencement des étapes du procédé selon des modes complémentaires de mise en œuvre de l'invention.

Pour pouvoir gérer les risques de collision, il faut pouvoir détecter le risque et, au besoin, anticiper une éventuelle manœuvre d'évitement. Le système bord bénéficie à cet effet des informations à jour de conjonctions, i.e. les dates et positions prévisionnelles de croisement de la trajectoire nominale du satellite et de la trajectoire d'un autre objet spatial, et de procédés algorithmiques pour calculer le risque associé à ces conjonctions sur un horizon temporel suffisamment long pour garantir la mise en place d'une solution d'évitement efficace qui tienne compte des contraintes de la plateforme et de son système propulsif.

Pour identifier le risque sur cet horizon temporel, il faut avoir la connaissance de la trajectoire future du satellite, i.e. avoir la connaissance d'un plan de manœuvres prévues sur cet horizon. Au-delà d'un certain horizon, les manœuvres prévues par le contrôle d'orbite autonome ne sont plus réalistes à cause de la mauvaise estimation de la dynamique orbitale future. Par ailleurs, au-delà d'un certain horizon, la fiabilité des informations de conjonction diminue fortement. Par exemple pour un satellite délivrant une poussée faible de l'ordre de 4mN/100 kg et ayant des contraintes sur le placement des manœuvres, il faut considérer un horizon d'environ 20 à 24h pour à la fois garantir la capacité de mise en place d'une solution d'évitement, et bénéficier d'information de conjonction suffisamment à jour, et garantir le maintien à poste satisfaisant.

En contrôle d'orbite autonome, le segment sol n'a pas de connaissance a priori des corrections orbitales qui seront mises en œuvre par le système bord. Ainsi les activités de planification de la mission et des passages stations sont réalisées uniquement à partir de l'orbite de référence. Cela explique le besoin de contrôle fin du contrôle d'orbite autonome autour de son orbite de guidage afin que le satellite soit suffisamment proche de son orbite de référence pour que le sol ne considère que cette dernière. Les créneaux d'orbite autorisés sur lesquels le contrôle d'orbite autonome peut positionner ses corrections orbitales correspondent à des créneaux libres d'activité programmée par la mission et libres de contraintes diverses (éblouissement instrument, contraintes d'éclipse, etc...). Le contrôle d'orbite autonome représente donc un grand avantage pour le segment sol qui peut planifier ses activités sur une orbite connue à l'avance et sans se soucier des activités de maintien à poste et de leurs conséquences. En revanche, les actions du contrôle d'orbite qui amèneraient à des sorties de fenêtres ne sont pas concertées avec le sol et peuvent conduire à une indisponibilité de la mission. Ceci est particulièrement vrai dans le cas où des solutions d'évitement de collision en urgence sont définies au détriment de la mission.

Les études de performances de l'algorithme de contrôle d'orbite autonome ont montré qu'il est possible de définir un horizon sur lequel les manœuvres sont définies à l'avance et potentiellement ajustables, tout en garantissant a minima le maintien à poste.

A contrario, avec la gestion par le bord du risque de collision, le contrôle d'orbite autonome a tout intérêt à pouvoir remettre en question son plan de manœuvres à chaque activation pour coller au mieux avec l'évolution des perturbations orbitales et l'évolution des contraintes missions. Le contrôle d'orbite autonome a seulement l'obligation de calculer un plan de manœuvres complet sur tout l'horizon de prédiction pour pouvoir déterminer le risque de collision associé.

Les manœuvres calculées sur l'horizon de calcul de risque, i.e. horizon de prédiction, constituent donc un plan de manœuvres back-up pour lequel on garantit qu'il est sans risque en l'état des connaissances de débris à l'instant de cette activation, et qu'il assure a minima le maintien à poste et sur une mission acceptable.

Le contrôle d'orbite autonome est activé par le système bord du satellite, typiquement une fois par orbite, par exemple à chaque détection, par le navigateur bord, d'un passage au nœud ascendant NA de l'orbite. Le navigateur bord délivre un bulletin de l'état orbital qui sera utilisé par le contrôle d'orbite autonome pour calculer son plan de manœuvres à venir.

Le segment sol traite en amont, au fur et à mesure de leur réception, les informations de conjonctions, sur la base de l'orbite de référence, et fournit au bord dès que possible les informations de conjonctions utiles sous un format approprié, en fonction des passages en visibilité station et donc de manière désynchronisée des activations du contrôle d'orbite autonome.

De même les créneaux autorisés par le programme de mission pour les manœuvres de maintien à poste sont transmises par le segment sol au système bord en dépendance des passages en visibilité station et donc de manière désynchronisée des activations du contrôle d'orbite autonome.

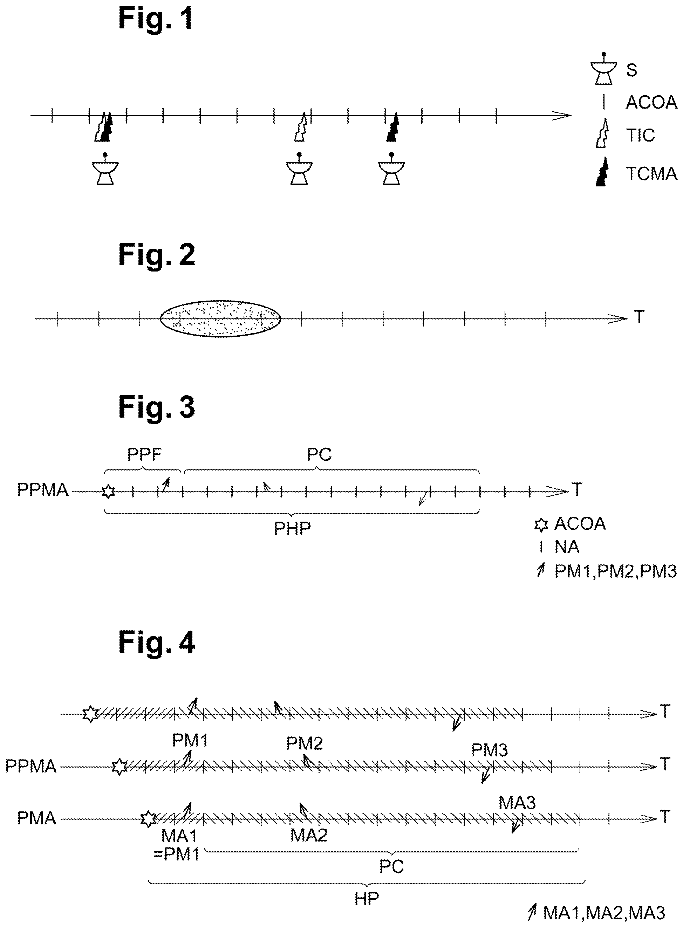

La figure 1 est une représentation, selon un axe du temps, des activations ACOA successives du procédé selon l'invention, et des transmissions des informations de conjonctions TIC d'une part, des transmissions des créneaux de manœuvres autorisés TCMA pour les manœuvres de maintien à poste d'autre part, en fonctions des passages en visibilité station S.

Lorsque la séquence calculatoire est longue, i.e. lorsque la mise en œuvre du procédé selon l'invention est d'une durée supérieure à un intervalle de temps entre deux activations ACOA du procédé, l'activation suivante du procédé peut être décalée, d'une orbite par exemple, comme cela est illustré sur la figure 2.

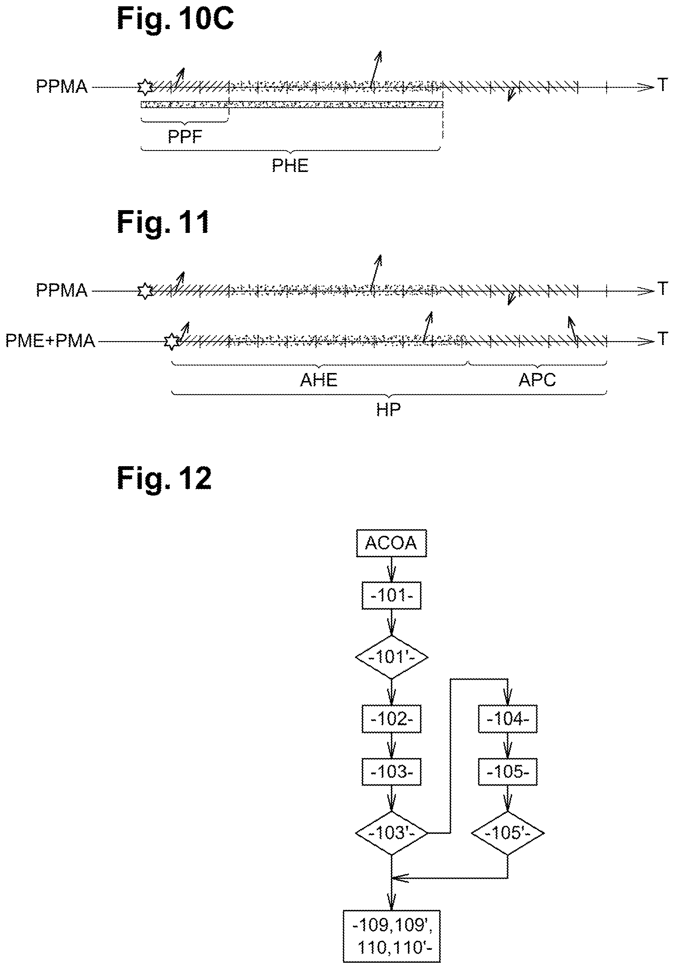

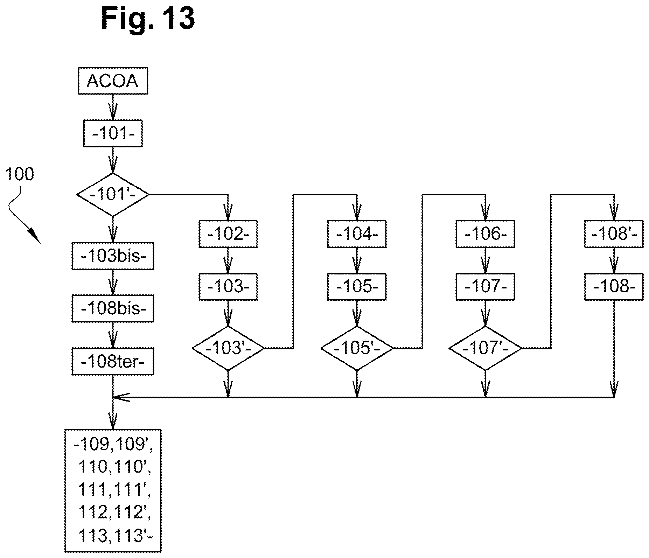

En référence aux figures 12 et 13, les différentes étapes du procédé 100 pour un contrôle d'orbite autonome d'un satellite, intégrant à bord du satellite un maintien à poste du satellite et un évitement d'une collision du satellite avec au moins un objet spatial, sont décrites ci-après.

Le procédé 100 est activé ACOA à un instant d'activation ; l'instant d'activation est par exemple l'instant d'un passage du satellite à un nœud ascendant NA de l'orbite du satellite. Ainsi, selon un mode de mise en œuvre du procédé, le procédé 100 est activé une fois par orbite, à chaque détection par le navigateur bord d'un passage du satellite à un nœud ascendant NA. Le délai d'activation DA entre deux activations successives est ainsi égale à la durée d'une orbite.

Le contenu de l'étape suivant l'activation courante du procédé 100 dépend d'un résultat d'une activation précédente du procédé 100, au cours de laquelle un précédent plan de manœuvres PPMA a été déterminé, puis sauvegardé. A la suite de ladite activation précédente du procédé 100, ledit précédent plan de manœuvres PPMA a été déterminé sur un précédent horizon temporel de prédiction PHP pour garantir le maintien à poste du satellite et/ou la gestion des risques de collision, ledit précédent plan de manœuvres PPMA comprenant, lorsqu'il n'est pas vide, au moins une précédente manœuvre PM1, PM2, PM3, l'au moins une précédente manœuvre PM1, PM2, PM3 étant définie pour être mise en œuvre à une date à l'intérieur du précédent horizon de prédiction PHP du précédent plan de manœuvres PPMA; le précédent horizon de prédiction PHP comprend une précédente partie figée PPF comprise entre un début du précédent horizon de prédiction PHP et une fin de la précédente partie figée PPF: si des manœuvres de maintien à poste du satellite ont été planifiées pendant ladite précédente partie figée PPF du précédent horizon de prédiction PHP du précédent plan de manœuvres PPMA, alors ces manœuvres ne pourront pas être remises en cause lors de la détermination d'un plan de manœuvres suivant, au cours de l'activation suivante du procédé.

Ledit précédent plan de manœuvres PPMA peut être l'un des différents types de plan de manœuvres susceptibles d'être déterminés puis sauvegardés au cours de la précédente activation du procédé; parmi ces différents types de plans de manœuvres susceptibles d'être déterminés puis sauvegardés au cours de la précédente activation du procédé, on trouve :
- un plan de manœuvres PMA, comprenant des manœuvres de maintien à poste déterminées sur le précédent horizon de prédiction PHP du précédent plan de manœuvres PPMA, ou
- un nouveau plan de manœuvres NPMA, comprenant des manœuvres de maintien à poste déterminées sur le précédent horizon de prédiction PHP du précédent plan de manœuvres PPMA ou
- un autre plan de manœuvres APMA, comprenant des manœuvres de maintien à poste déterminées sur le précédent horizon de prédiction PHP du précédent plan de manœuvres PPMA.

Le précédent plan de manœuvres PPMA peut aussi comprendre un plan de manœuvres d'évitement PME comprenant des manœuvres d'évitement d'une collision déterminées sur un autre horizon d'évitement AHE, ou sur un précédent horizon d'évitement PHE du précédent plan de manœuvres PPMA, et un plan de manœuvres PMA comprenant des manœuvres de maintien à poste déterminées sur une partie calculée PC, ou une autre partie calculée APC, du précédent horizon de prédiction du précédent plan de manœuvres PPMA, ladite partie calculée PC, ou ladite autre partie calculée APC étant comprise entre la fin du précédent horizon d'évitement PHE et la fin du précédent horizon de prédiction PHP.

Par convention, le terme « manœuvre » est utilisé seul, ci-après, pour désigner des manœuvres de maintien ou de mise à poste, et les termes « manœuvre d'évitement » désignent des manœuvres plus précisément destinées à éviter une collision.

Le procédé 100 comprend donc une utilisation 101 d'un précédent plan de manœuvres PPMA déterminé sur un précédent horizon de prédiction PHP pour garantir le maintien à poste du satellite et/ou la gestion des risques de collision, et sauvegardé au cours d'une activation précédente. Le contenu spécifique des différents types de plans de manœuvres, et plan de manœuvres d'évitement PME, susceptibles de composer le précédent plan de manœuvres PPMA sont définis plus précisément ci-après.

Le procédé 100 comprend ensuite une étape de vérification 101' du contenu du précédent plan de manœuvres PPMA.

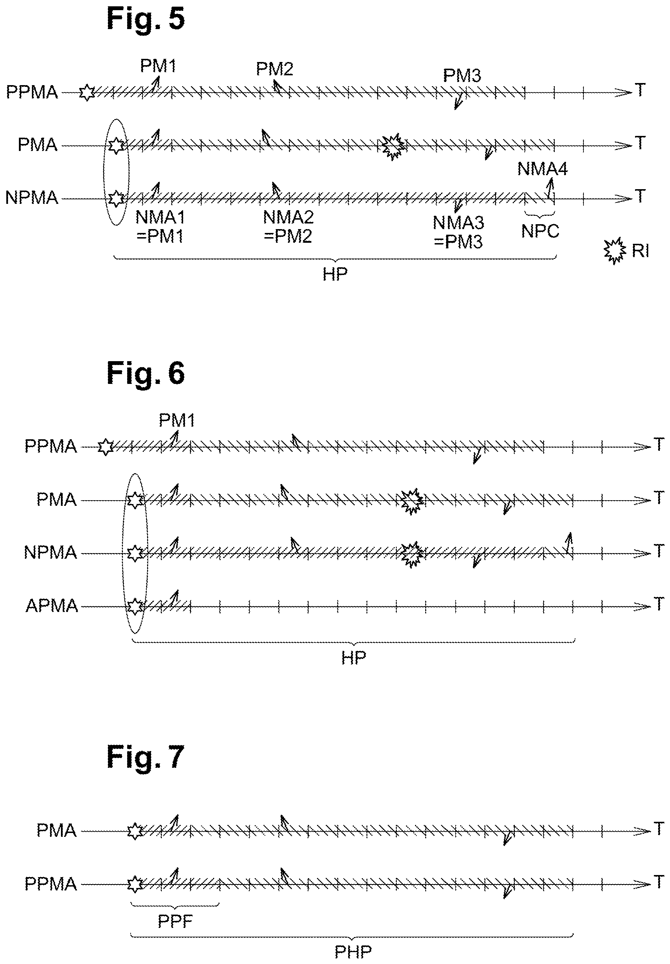

Si 101' le précédent plan de manœuvres PPMA comprend un plan de manœuvres d'évitement PME déterminé sur un précédent horizon d'évitement PHE, et si une fin dudit précédent horizon d'évitement PHE est antérieure à la fin de la précédente partie figée PPF du précédent horizon de prédiction PHP, comme cela est illustré sur la figure 10b, ou si le précédent plan de manœuvres PPMA n'est pas un plan de manœuvres d'évitement PME, autrement dit si le précédent plan de manœuvres PPMA ne contient aucune maneouvres d'évitement, autrement dit encore si le précédent horizon d'évitement PHE est nul, comme cela est illustré sur la figure 10a, les étapes suivantes sont alors mises en œuvre:
- détermination 102 d'un plan de manœuvres PMA sur un horizon de prédiction HP pour garantir le maintien à poste du satellite ; comme cela est illustré en figure 4, ledit plan de manœuvres PMA, lorsqu'il n'est pas vide, comprend au moins une précédente manœuvre PM1 du précédent plan de manœuvres PPMA, lorsque celui-ci n'est pas vide, si l'au moins une précédente manœuvre PM1=MA1 est définie pour être mise en œuvre à une date à l'intérieur de la précédente partie figée PPF et à l'intérieur de l'horizon de prédiction HP du plan de manœuvres PMA; l'horizon de prédiction HP a une durée égale à la durée du précédent horizon de prédiction PHP, un début de l'horizon de prédiction HP étant décalé dans le temps T par rapport au début du précédent horizon de prédiction PHP, le décalage dans le temps étant égal au délai d'activation DA ; le plan de manœuvres PMA comprend en outre, lorsqu'il n'est pas vide, au moins une manœuvre MA2, MA3, l'au moins une manœuvre MA2, MA3 étant définie pour être mise en œuvre pendant une partie calculée PC de l'horizon de prédiction comprise entre la fin de la précédente partie figée PPF et la fin de l'horizon de prédiction HP ; le plan de manœuvres PMA est déterminé en fonction de créneaux autorisés sur l'horizon de prédiction HP par un programme de mission du satellite. Avantageusement, une durée de l'horizon de prédiction HP est égale à une durée d'au moins 3 orbites successives du satellite, voire égale à une durée d'un nombre compris entre 10 et 20 d'orbites successives, le nombre d'orbites successives étant de préférence égale à 14 ou 15. Une durée de la précédente partie figée PPF est avantageusement égale à une durée de 3 orbites successives du satellite.
- identification 103, pour une trajectoire correspondant à une exécution du plan de manœuvres PMA déterminé, d'un risque identifié RI de collision avec un objet spatial et détermination d'un niveau de risque de collision avec l'objet spatial. Ledit objet spatial est un objet parmi une liste d'objets spatiaux dont la trajectoire a été préalablement transmise au satellite sous la forme d'informations de conjonctions par le système sol.
- Vérifier 103' si le niveau de risque est inférieur ou égal à un seuil prédéterminé; si le niveau de risque est inférieur ou égal à ce seuil prédéterminé, transmission 109 du plan de manœuvres PMA à un système de commande de propulsion et de contrôle d'attitude du satellite pour exécution des manœuvres de la précédente partie figée PPF, l'étape de transmission 109 comprenant une étape de sauvegarde 109', dans laquelle le plan de manœuvres PMA devient le précédent plan de manœuvres PPMA, comme cela est illustré sur la figure 7. Si le niveau de risque est supérieur au seuil prédéterminé, alors les étapes suivantes sont mises en œuvre :
- détermination 104 d'un nouveau plan de manœuvres NPMA sur l'horizon de prédiction HP pour garantir le maintien à poste du satellite sur cet horizon temporel; comme cela est illustré sur la figure 5, ledit nouveau plan de manœuvres NPMA comprend au moins une précédente manœuvre PM1, PM2, PM3 du précédent plan de manœuvres PPMA, lorsqu'il n'est pas vide, si l'au moins une précédente manœuvre PM1=NMA1, PM2=NMA2, PM3=NMA3 est définie pour être mise en œuvre à une date à l'intérieur du précédent horizon de prédiction PHP et à l'intérieur de l'horizon de prédiction HP du nouveau plan de manœuvres NPMA ; le nouveau plan de manœuvres NPMA comprend en outre, lorsqu'il n'est pas vide, au moins une nouvelle manœuvre NMA4, l'au moins une nouvelle manœuvre NMA4 étant définie pour être mise en œuvre sur une nouvelle partie calculée NPC de l'horizon de prédiction HP comprise entre la fin du précédent plan de manœuvres PPMA et la fin de l'horizon de prédiction HP, le nouveau plan de manœuvres NPMA étant déterminé en fonction de créneaux autorisés sur l'horizon de prédiction HP par un précédent programme de mission du satellite;
- identification 105, pour une nouvelle trajectoire correspondant à une exécution du nouveau plan de manœuvres NPMA déterminé à l'étape précédente, d'un nouveau risque identifié de collision avec au moins un nouvel objet spatial et détermination d'un nouveau niveau de risque de collision avec l'au moins un nouvel objet spatial, l'au moins un nouvel objet et l'au moins un objet pouvant être identiques;
- Vérifier 105' si le niveau de risque est inférieur ou égal à un nouveau seuil prédéterminé ; si le nouveau niveau de risque est inférieur ou égal à ce seuil prédéterminé, transmission 110 du nouveau plan de manœuvres NPMA à un système de commande de propulsion et de contrôle d'attitude du satellite pour exécution des manœuvres de la précédente partie figée PPF, l'étape de transmission 110 comprenant une étape de sauvegarde 110', dans laquelle le nouveau plan de manœuvres NPMA devient le précédent plan de manœuvres PPMA.

Selon ces dispositions, les manœuvres du plan de manœuvres sont calculées sur un horizon de prédiction de manière à obtenir un niveau de risque de collision acceptable sur la base des conjonctions connues à l'instant d'activation considéré, en assurant le maintien à poste pour la mission, dans le cas où il n'y pas de risque de collision identifié.

En particulier, si (105') le niveau de risque est supérieur au seuil prédéterminé, alors les étapes suivantes sont mises en œuvre :
- détermination 106 d'un autre plan de manœuvres APMA sur l'horizon de prédiction HP ; comme cela est illustré sur la figure 6, l'autre plan de manœuvres APMA comprend seulement l'au moins une précédente manœuvre PM1 du précédent plan de manœuvres PPMA, lorsqu'il n'est pas vide, si l'au moins une précédente manœuvre PM1 est définie pour être mise en œuvre à une date à l'intérieur de la précédente partie figée PPF ; à l'intérieur de l'horizon de prédiction HP dudit autre plan de manœuvres APMA, l'autre plan de manœuvres APMA ne comprend aucune manœuvre si l'au moins une précédente manœuvre PM1 n'est pas définie pour être mise en œuvre pendant la précédente partie figée PPF et à l'intérieur de horizon de prédiction HP ;
- identification 107, pour une autre trajectoire correspondant à une exécution de l'autre plan de manœuvre APMA, d'un autre risque identifié de collision avec au moins un autre objet spatial et détermination d'un autre niveau de risque de collision avec l'au moins un autre objet spatial, l'au moins un autre objet spatial et l'au moins un objet spatial pouvant être identiques;
- Vérifier 107' si le niveau de risque est inférieur ou égal à un autre seuil prédéterminé ; si l'autre niveau de risque est inférieur ou égal à ce seuil prédéterminé, transmission 111 de l'autre plan de manœuvres APMA à un système de commande de propulsion et de contrôle d'attitude du satellite pour exécution des manœuvres de la précédente partie figée PPF, l'étape de transmission 111 comprenant une étape de sauvegarde 111', dans laquelle l'autre plan de manœuvres APMA devient le précédent plan de manœuvres PPMA.

Plus particulièrement, si 107' le niveau de risque est supérieur au seuil prédéterminé, alors les étapes suivantes sont mises en œuvre :
- détermination 108 d'un plan de manœuvres d'évitement PME sur un horizon d'évitement HE ; comme cela est illustré à la figure 8, ledit plan de manœuvres d'évitement PME comprenant l'au moins une précédente manœuvre PM1 du précédent plan de manœuvres PPMA, lorsqu'il n'est pas vide, si l'au moins une précédente manœuvre PM1 est définie pour être mise en œuvre pendant la précédente partie figée PPF du précédent horizon de prédiction PHP, le plan de manœuvres d'évitement PME comprenant en outre au moins une manœuvre d'évitement MAE2 pour éviter la collision avec l'autre objet spatial, en utilisant les créneaux autorisés par le programme de mission du satellite ; ou en utilisant, par exemple, des créneaux prioritaires autorisés par le programme de mission du satellite ; dans ce cas les créneaux prioritaires sont des créneaux temporels spécifiques, distincts des créneaux autorisés par ledit programme de mission, à l'intérieur desquels il est possible de placer une manoeuvre d'évitement d'une collision. Avantageusement, un début de l'horizon d'évitement coïncide avec le début de l'horizon de prédiction HP, et une fin de l'horizon d'évitement est déterminée en fonction d'un instant de plus petit rapprochement du satellite avec l'autre objet spatial. L'instant de plus petit rapprochement du satellite avec l'autre objet spatial est par exemple l'instant où une distance entre le satellite sur sa trajectoire prévisible et l'objet spatial sur sa trajectoire prévisible est minimum. Plus avantageusement, la fin de l'horizon d'évitement est l'instant de plus petit rapprochement du satellite avec l'autre objet spatial, augmenté d'une période de temps prédéterminée, les créneaux prioritaires utilisés pour l'au moins une manœuvre d'évitement étant positionnés avant l'instant de plus petit rapprochement du satellite avec l'autre objet spatial, des créneaux complémentaires étant positionnés sur la période de temps prédéterminée pour des manœuvres complémentaires destinées à assurer un retour du satellite sur une orbite de référence ; plus particulièrement, les créneaux prioritaires autorisés pour la détermination du plan de manœuvres d'évitement PME sont déterminés en fonction des créneaux autorisés sur l'horizon de prédiction HP par le programme de mission pour favoriser le maintien à poste et en fonction d'autres créneaux autorisés par un autre programme de mission défini pour favoriser l'évitement ; notamment, les autres créneaux autorisés par l'autre programme de mission comprennent les créneaux complémentaires autorisés pour les manœuvres complémentaires destinées à assurer le retour du satellite sur l'orbite de référence ; selon un exemple particulier, l'horizon d'évitement comprend une période de reprise comprise entre un premier instant de reprise et un deuxième instant de reprise, les créneaux alloués pour la détermination du plan de manœuvres d'évitement PME étant les créneaux de l'autre programme de mission qui sont compris dans la période de reprise, et les créneaux du programme de mission nominal qui ne sont pas compris dans la période de reprise.
- transmission 112 du plan de manœuvres d'évitement PME au système de commande de propulsion et de contrôle d'attitude du satellite pour exécution des manœuvres de la précédente partie figée PPF, l'étape de transmission 112 comprenant une étape de sauvegarde 112', dans laquelle, comme cela est illustré à la figure 9, le plan de manœuvres d'évitement PME et une partie sans manœuvre comprise entre une fin de l'horizon d'évitement et la fin de l'horizon de prédiction HP deviennent le précédent plan de manœuvres PPMA.

Selon ces dispositions, les manœuvres des plans de manœuvres successifs sont calculées sur un horizon de prédiction HP de manière à garantir un niveau de risque de collision acceptable sur la base des conjonctions connues à l'instant d'activation considéré, en assurant le maintien à poste pour la mission, et de manière à garantir, le cas échéant, un évitement des collisions identifiées en pénalisant le moins possible la mission.

Encore plus particulièrement, dans le cas 101' où le précédent plan de manœuvres PPMA sauvegardé suite à l'activation 101 du procédé 100, comprend un plan de manœuvres d'évitement PME déterminé sur un précédent horizon d'évitement PHE, et si la fin dudit précédent horizon d'évitement PHE est postérieure à la fin de la précédente partie figée PPF dudit précédent plan de manœuvres PPMA, comme cela est illustré sur la figure 10c, alors les étapes suivantes sont mises en œuvre :
- mise à jour 103bis, pour une trajectoire correspondant à une exécution du précédent plan de manœuvres PPMA déterminé, d'un risque identifié RI de collision avec l'au moins un objet spatial et détermination d'un niveau de risque de collision avec l'au moins un objet spatial ;
- détermination 108bis d'un plan de manœuvres d'évitement PME sur un autre horizon d'évitement AHE, comme cela est illustré en figure 11 ;
- détermination 108ter d'un plan de manœuvres PMA sur une autre partie calculée APC comprise entre la fin de l'autre horizon d'évitement AHE et la fin de l'horizon de prédiction HP, l'horizon de prédiction HP ayant une durée égale à la durée du précédent horizon de prédiction PHP, un début de l'horizon de prédiction HP étant décalé dans le temps T par rapport au début du précédent horizon de prédiction PHP, le décalage dans le temps étant égal au délai d'activation DA, comme cela est illustré en figure 11;
- transmission 113 du plan de manœuvres d'évitement PME et du plan de manœuvres au système de commande de propulsion et de contrôle d'attitude du satellite pour exécution des manœuvres de la précédente partie figée PPF, l'étape de transmission 113 comprenant une étape de sauvegarde 113', dans laquelle le précédent plan de manœuvres PPMA est composé du plan de manœuvres d'évitement PME et du plan de manœuvre PMA.

Le procédé 100 est ensuite activé au moins une nouvelle fois à un nouveau passage, voire à chaque passage, du satellite à un nœud ascendant de l'orbite du satellite, avec la répétition des étapes précédemment décrites.

L'invention concerne également un satellite comprenant un dispositif de contrôle d'orbite autonome, le dispositif étant configuré pour assurer de manière autonome à bord du satellite une fonction de maintien à poste du satellite et une fonction d'évitement d'une collision du satellite avec au moins un objet spatial, le satellite comprenant :
- un équipement d'activation configuré pour activer ACOA le dispositif à un instant d'activation,
le dispositif comprenant :
- un moyen de détermination d'un plan de manœuvres PMA pour garantir le maintien à poste du satellite, le plan de manœuvres PMA comprenant, lorsqu'il n'est pas vide, au moins une manœuvre MA1, MA2, MA3, l'au moins une manœuvre MA1, MA2, MA3 étant définie pour être mise en œuvre à une date à l'intérieur d'un horizon de prédiction HP du plan de manœuvres PMA, l'horizon de prédiction HP ayant une durée comprise entre un début de l'horizon de prédiction HP correspondant à l'instant d'activation et une fin de l'horizon de prédiction HP, le plan de manœuvres PMA étant déterminé à partir d'un précédent plan de manœuvres PPMA comprenant, lorsqu'il n'est pas vide, au moins une précédente manœuvre PM1, PM2, PM3, l'au moins une précédente manœuvre PM1, PM2, PM3 étant définie pour être mise en œuvre à une date à l'intérieur d'un précédent horizon de prédiction PHP du précédent plan de manœuvres PPMA, le précédent horizon de prédiction PHP ayant une durée égale à la durée de l'horizon de prédiction HP, le début de l'horizon de prédiction HP étant décalé dans le temps T par rapport à un début du précédent horizon de prédiction PHP, le décalage dans le temps étant égal à un délai d'activation DA, l'horizon de prédiction HP comprenant une partie figée PF comprise entre le début de l'horizon de prédiction HP et une fin de la première figée PF, et une partie calculée PC comprise entre la fin de la partie figée PF et la fin de l'horizon de prédiction HP, le plan de manœuvres PMA étant déterminé en fonction de créneaux autorisés sur l'horizon de prédiction HP par un programme de mission, l'au moins une manœuvre MA1, MA2, MA3 du plan de manœuvres PMA comprenant l'au moins une précédente manœuvre PM1 du précédent plan de manœuvres PPMA si l'au moins une précédente manœuvre PM1 est définie pour être mise en œuvre pendant la partie figée PF de l'horizon de prédiction HP;
- un moyen d'identification d'un risque identifié RI de collision avec l'au moins un objet spatial et détermination d'un niveau de risque de collision avec l'au moins un objet spatial ;
- un moyen de vérification si 103' le niveau de risque est inférieur ou égal à un seuil prédéterminé ;
- un moyen transmission configuré pour transmettre le plan de manœuvres PMA à un système de commande de propulsion et de contrôle d'attitude du satellite et pour sauvegarder le plan de manœuvres PMA de sorte que le plan de manœuvres PMA devient le précédent plan de manœuvres PPMA si 103' le niveau de risque est inférieur ou égal à un seuil prédéterminé ;
- le moyen de détermination étant configuré, si 103' le niveau de risque est supérieur au seuil prédéterminé, pour déterminer un nouveau plan de manœuvres NPMA, le nouveau plan de manœuvres NPMA comprenant, lorsqu'il n'est pas vide, l'au moins une précédente manœuvre PM1, PM2, PM3 du précédent plan de manœuvres PPMA si l'au moins une précédente manœuvre PM1=NMA1, PM2=NMA2, PM3=NMA3 est définie pour être mise en œuvre à une date à l'intérieur du précédent horizon de prédiction PHP et à l'intérieur de l'horizon de prédiction HP;
- le moyen d'identification étant configuré pour identifier un nouveau risque de collision avec au moins un nouvel objet spatial et pour déterminer un nouveau niveau de risque de collision avec l'au moins un nouvel objet spatial;
- le moyen de vérification étant configuré pour vérifier si 105' le nouveau niveau de risque est inférieur ou égal à un nouveau seuil prédéterminé ;
- le moyen de transmission étant configuré pour transmettre le nouveau plan de manœuvres NPMA au système de commande de propulsion et de contrôle d'attitude du satellite et pour sauvegarder le nouveau plan de manœuvres NPMA de sorte que le nouveau plan de manœuvres NPMA devient le précédent plan de manœuvres PPMA, si 105' le nouveau niveau de risque est inférieur ou égal à un nouveau seuil prédéterminé:
- le moyen de détermination étant configuré pour déterminer une trajectoire sans manœuvre si 105' le nouveau niveau de risque est supérieur au seuil prédéterminé;
- le moyen d'identification étant configuré pour identifier un autre risque de collision avec au moins un autre objet spatial et pour déterminer un autre niveau de risque de collision avec l'au moins un autre objet spatial;
- le moyen de vérification étant configuré pour vérifier si 107' l'autre niveau de risque est inférieur ou égal à un autre seuil prédéterminé ;
- le moyen transmission étant configuré pour transmettre l'autre plan de manœuvres APMA au système de commande de propulsion et de contrôle d'attitude du satellite et pour sauvegarder l'autre plan de manœuvres APMA de sorte que l'autre plan de manœuvres APMA devient le précédent plan de manœuvres PPMA, si 107' l'autre niveau de risque est inférieur ou égal à un autre seuil prédéterminé;
- le moyen de détermination étant configuré pour déterminer un plan de manœuvres d'évitement PME si 107' le niveau de risque est supérieur à l'autre seuil prédéterminé, le plan de manœuvres d'évitement PME comprenant au moins une manœuvre d'évitement pour éviter la collision avec l'autre objet spatial, en utilisant des créneaux prioritaires.
- le moyen de transmission 112 étant configuré pour transmettre le plan de manœuvres d'évitement PME au système de commande de propulsion et de contrôle d'attitude du satellite et pour sauvegarder le plan de manœuvres d'évitement PME de sorte que le plan de manœuvres d'évitement PME et une partie sans manœuvre deviennent ensemble le précédent plan de manœuvres PPMA.

Le satellite peut en outre comprendre un moyen de vérification du contenu du précédent plan de manœuvres PPMA, de sorte que le moyen d'identification est configuré pour mettre à jour 103bis, pour une trajectoire correspondant à une exécution du précédent plan de manœuvres déterminé, un risque identifié RI de collision avec l'au moins un objet spatial et détermination d'un niveau de risque de collision avec l'au moins un objet spatial, et le moyen de détermination est configuré pour déterminer un plan de manœuvres d'évitement PME sur un autre horizon d'évitement AHE, et pour déterminer un plan de manœuvres PMA sur une autre partie calculée APC de l'horizon de prédiction HP comprise entre la fin de l'autre horizon d'évitement AHE et la fin de l'horizon de prédiction HP, et le moyen de transmission est configuré pour transmettre le plan de manœuvres d'évitement PME et le plan de manœuvres au système de commande de propulsion et de contrôle d'attitude du satellite pour exécution des manœuvres de la précédente partie figée PPF, et pour sauvegarder 113' ledit plan de manœuvres d'évitement PME et ledit plan de manœuvre PMA, si le précédent plan de manœuvres PPMA comprend un plan de manœuvres d'évitement PME déterminé sur un précédent horizon d'évitement PHE, et si la fin dudit précédent horizon d'évitement PHE est postérieure à la fin de la précédente partie figée PPF dudit précédent plan de manœuvres PPMA.

## Revendications

1. Procédé (100) pour un contrôle d'orbite autonome d'un satellite intégrant à bord du satellite un maintien à poste du satellite et un évitement d'une collision du satellite avec au moins un objet spatial, le procédé comprenant les étapes suivantes :
- activation (ACOA) du procédé (100) à un instant d'activation;
- utilisation (101) d'un précédent plan de manœuvres (PPMA) déterminé sur un précédent horizon de prédiction (PHP) pour garantir le maintien à poste du satellite et/ou la gestion des risques de collision, le précédent plan de manœuvres (PPMA) comprenant au moins une précédente manœuvre (PM1, PM2, PM3), l'au moins une précédente manœuvre (PM1, PM2, PM3) étant définie pour être mise en œuvre à une date à l'intérieur du précédent horizon de prédiction (PHP) du précédent plan de manœuvres (PPMA), le précédent horizon de prédiction (PHP) comprenant une précédente partie figée (PPF) comprise entre un début du précédent horizon de prédiction (PHP) et une fin de la précédente partie figée (PPF), le précédent plan de manœuvres (PPMA) étant l'un parmi un plan de manœuvres (PMA) déterminé sur le précédent horizon de prédiction (PHP), un nouveau plan de manœuvres (NPMA) déterminé sur le précédent horizon de prédiction (PHP), un autre plan de manœuvres (APMA) déterminé sur le précédent horizon de prédiction (PHP), ou le précédent plan de manœuvres comprenant un plan de manœuvres d'évitement (PME) déterminé sur un précédent horizon d'évitement (PHE), **caractérisé en ce que** le procédé comprend les étapes suivantes:
- si (101') le précédent plan de manœuvres (PPMA) comprend un plan de manœuvres d'évitement (PME) déterminé sur un précédent horizon d'évitement PHE, et si une fin dudit précédent horizon d'évitement PHE est antérieure à la fin de la précédente partie figée (PPF), ou si le précédent plan de manœuvres (PPMA) n'est pas un plan de manœuvres d'évitement (PME), les étapes suivantes sont mises en œuvre:
- détermination (102) d'un plan de manœuvres (PMA) sur un horizon de prédiction (HP) pour garantir le maintien à poste du satellite, ledit plan de manœuvres (PMA) comprenant au moins une précédente manœuvre (PM1) du précédent plan de manœuvres (PPMA), lorsqu'il n'est pas vide, si l'au moins une précédente manœuvre (PM1=MA1) est définie pour être mise en œuvre à une date à l'intérieur de la précédente partie figée (PPF) et à l'intérieur de l'horizon de prédiction (HP) du plan de manœuvres (PMA), l'horizon de prédiction (HP) ayant une durée égale à la durée du précédent horizon de prédiction (PHP), un début de l'horizon de prédiction (HP) étant décalé dans le temps (T) par rapport au début du précédent horizon de prédiction (PHP), le décalage dans le temps étant égal à un délai d'activation (DA), le plan de manœuvres (PMA) comprenant en outre, lorsqu'il n'est pas vide, au moins une manœuvre (MA2, MA3), l'au moins une manœuvre (MA2, MA3) étant définie pour être mise en œuvre pendant une partie calculée (PC) de l'horizon de prédiction comprise entre la fin de la précédente partie figée (PPF) et la fin de l'horizon de prédiction (HP), le plan de manœuvres (PMA) étant déterminé en fonction de créneaux autorisés sur l'horizon de prédiction (HP) par un programme de mission du satellite;
- identification (103), pour une trajectoire correspondant à une exécution du plan de manœuvres (PMA) déterminé, d'un risque identifié (RI) de collision avec l'au moins un objet spatial et détermination d'un niveau de risque de collision avec l'au moins un objet spatial ;
- si (103') le niveau de risque est inférieur ou égal à un seuil prédéterminé, transmission (109) du plan de manœuvres (PMA) à un système de commande de propulsion et de contrôle d'attitude du satellite pour exécution des manœuvres de la précédente partie figée (PPF), l'étape de transmission (109) comprenant une étape de sauvegarde (109'), dans laquelle le plan de manœuvres (PMA) devient le précédent plan de manœuvres (PPMA) ;
- si (103') le niveau de risque est supérieur au seuil prédéterminé:
- détermination (104) d'un nouveau plan de manœuvres (NPMA) sur l'horizon de prédiction (HP) pour garantir le maintien à poste du satellite, ledit nouveau plan de manœuvres (NPMA) comprenant au moins une précédente manœuvre (PM1, PM2, PM3) du précédent plan de manœuvres (PPMA) si l'au moins une précédente manœuvre (PM1=NMA1, PM2=NMA2, PM3=NMA3) est définie pour être mise en œuvre à une date à l'intérieur du précédent horizon de prédiction (PHP) et à l'intérieur de l'horizon de prédiction (HP) du nouveau plan de manœuvres (NPMA), le nouveau plan de manœuvres (NPMA) comprenant en outre au moins une nouvelle manœuvre (NMA4), l'au moins une nouvelle manœuvre (NMA4) étant définie pour être mise en œuvre sur une nouvelle partie calculée (NPC) de l'horizon de prédiction (HP) comprise entre la fin du précédent plan de manœuvres (PPMA) et la fin de l'horizon de prédiction (HP), le nouveau plan de manœuvres (NPMA) étant déterminé en fonction de créneaux autorisés sur l'horizon de prédiction (HP) par un précédent programme de mission du satellite;
- identification (105), pour une nouvelle trajectoire correspondant à une exécution du nouveau plan de manœuvres (NPMA) déterminé, d'un nouveau risque identifié de collision avec au moins un nouvel objet spatial et détermination d'un nouveau niveau de risque de collision avec l'au moins un nouvel objet spatial, l'au moins un nouvel objet et l'au moins un objet pouvant être identiques;
- si (105') le nouveau niveau de risque est inférieur ou égal à un nouveau seuil prédéterminé, transmission (110) du nouveau plan de manœuvres (NPMA) au système de commande de propulsion et de contrôle d'attitude du satellite pour exécution des manœuvres de la précédente partie figée (PPF), l'étape de transmission (110) comprenant une étape de sauvegarde (110'), dans laquelle le nouveau plan de manœuvres (NPMA) devient le précédent plan de manœuvres (PPMA) ;
- activation du procédé (100) au moins une fois à un instant d'activation suivant, l'instant d'activation suivant étant l'instant d'activation décalé du délai d'activation.

2. Procédé (100) selon la revendication précédente, comprenant en outre les étapes suivantes, si (105') le nouveau niveau de risque est supérieur au seuil prédéterminé:
- détermination (106) d'un autre plan de manœuvres (APMA) sur l'horizon de prédiction (HP), l'autre plan de manœuvres (APMA) comprenant seulement l'au moins une précédente manœuvre (PM1) du précédent plan de manœuvres (PPMA) si l'au moins une précédente manœuvre (PM1) est définie pour être mise en œuvre à une date à l'intérieur de la précédente partie figée (PPF) et à l'intérieur de l'horizon de prédiction (HP) dudit autre plan de manœuvres (APMA) , l'autre plan de manœuvres (APMA) ne comprenant aucune manœuvre si l'au moins une précédente manœuvre (PM1) n'est pas définie pour être mise en œuvre pendant la précédente partie figée (PPF) et à l'intérieur de horizon de prédiction (PHP);
- identification (107), pour une autre trajectoire correspondant à une exécution de l'autre plan de manœuvre (APMA), d'un autre risque identifié de collision avec au moins un autre objet spatial et détermination d'un autre niveau de risque de collision avec l'au moins un autre objet spatial, l'au moins un autre objet spatial et l'au moins un objet spatial pouvant être identiques;
- si (107') l'autre niveau de risque est inférieur ou égal à un autre seuil prédéterminé, transmission (111) de l'autre plan de manœuvres (APMA) au système de commande de propulsion et de contrôle d'attitude du satellite pour exécution des manœuvres de la précédente partie figée (PPF), l'étape de transmission (111) comprenant une étape de sauvegarde (111'), dans laquelle l'autre plan de manœuvres (APMA) devient le précédent plan de manœuvres (PPMA) ;

3. Procédé (100) selon la revendication précédente, comprenant en outre les étapes suivantes, si (107') l'autre niveau de risque est supérieur à l'autre seuil prédéterminé:
- détermination (108) d'un plan de manœuvres d'évitement sur un horizon d'évitement (HE), le plan de manœuvres d'évitement (PME) comprenant l'au moins une précédente manœuvre (PM1) du précédent plan de manœuvres (PPMA) si l'au moins une précédente manœuvre (PM1) est définie pour être mise en œuvre pendant la précédente partie figée (PPF) du précédent horizon de prédiction (PHP), le plan de manœuvres d'évitement (PME) comprenant en outre au moins une manœuvre d'évitement (MAE2) pour éviter la collision avec l'autre objet spatial;
- transmission (112) du plan de manœuvres d'évitement (PME) au système de commande de propulsion et de contrôle d'attitude du satellite pour exécution des manœuvres de la précédente partie figée (PPF), l'étape de transmission (112) comprenant une étape de sauvegarde (112'), dans laquelle le plan de manœuvres d'évitement (PME) et une partie sans manœuvre comprise entre une fin de l'horizon d'évitement et la fin de l'horizon de prédiction HP deviennent ensemble le précédent plan de manœuvres (PPMA).

4. Procédé (100) selon la revendication précédente, dans lequel le plan de manœuvres d'évitement (PME) est déterminé en utilisant des créneaux prioritaires autorisés par le programme de mission du satellite.

5. Procédé (100) selon l'une des revendications précédentes, dans lequel un début de l'horizon d'évitement coïncide avec le début de l'horizon de prédiction (HP), et dans lequel une fin de l'horizon d'évitement est déterminée en fonction d'un instant de plus petit rapprochement du satellite avec l'autre objet spatial.

6. Procédé (100) selon la revendication précédente, dans lequel la fin de l'horizon d'évitement est l'instant de plus petit rapprochement du satellite avec l'autre objet spatial, augmenté d'une période de temps prédéterminée, les créneaux prioritaires utilisés pour l'au moins une manœuvre d'évitement étant positionnés avant l'instant de plus petit rapprochement du satellite avec l'autre objet spatial, des créneaux complémentaires étant positionnés sur la période de temps prédéterminée pour des manœuvres complémentaires destinées à assurer un retour du satellite sur une orbite de référence.

7. Procédé (100) selon la revendication précédente, dans lequel les créneaux prioritaires autorisés pour la détermination du plan de manœuvres d'évitement (PME) sont déterminés en fonction des créneaux autorisés sur l'horizon de prédiction (HP) par le programme de mission pour favoriser le maintien à poste et en fonction d'autres créneaux autorisés par un autre programme de mission défini pour favoriser l'évitement.

8. Procédé (100) selon la revendication précédente, dans lequel les autres créneaux autorisés par l'autre programme de mission comprennent les créneaux complémentaires autorisés pour les manœuvres complémentaires destinées à assurer le retour du satellite sur l'orbite de référence.

9. Procédé (100) selon la revendication précédente, dans lequel le programme de mission nominal et l'autre programme de mission comprennent une période de reprise commune comprise entre un premier instant de reprise et un deuxième instant de reprise, les créneaux alloués pour la détermination du plan de manœuvres d'évitement (PME) étant les créneaux de l'autre programme de mission qui sont compris dans la période de reprise, et les créneaux du programme de mission nominal qui ne sont pas compris dans la période de reprise.

10. Procédé (100) selon l'une des revendications précédentes, comprenant en outre les étapes suivantes, si (101') le précédent plan de manœuvres (PPMA), sauvegardé suite à l'activation (101) du procédé (100), comprend un plan de manœuvres d'évitement (PME) déterminé sur un précédent horizon d'évitement (PHE), et si la fin dudit précédent horizon d'évitement (PHE) est postérieure à la fin de la précédente partie figée (PPF) dudit précédent plan de manœuvres (PPMA):
- mise à jour (103bis), pour une trajectoire correspondant à une exécution du précédent plan de manœuvres déterminé, d'un risque identifié (RI) de collision avec l'au moins un objet spatial et détermination d'un niveau de risque de collision avec l'au moins un objet spatial ;
- détermination (108bis) d'un plan de manœuvres d'évitement (PME) sur un autre horizon d'évitement (AHE) ;
- détermination (108ter) d'un plan de manœuvres (PMA) sur une autre partie calculée (APC) de l'horizon de prédiction (HP), l'autre partie calculée (APC) étant comprise entre la fin de l'autre horizon d'évitement (AHE) et la fin de l'horizon de prédiction (HP),
- transmission (113) du plan de manœuvres d'évitement (PME) et du plan de manœuvres (PMA) au système de commande de propulsion et de contrôle d'attitude du satellite pour exécution des manœuvres de la précédente partie figée (PPF), l'étape de transmission (113) comprenant une étape de sauvegarde (113'), dans laquelle le plan de manœuvres d'évitement (PME) et le plan de manœuvres (PMA) deviennent ensemble le précédent plan de manœuvres (PPMA).

11. Procédé (100) selon l'une des revendications précédentes, dans lequel le délai d'activation (DA) est égale à une durée d'une orbite du satellite.

12. Procédé (100) selon l'une des revendications précédentes, dans lequel la durée de l'horizon de prédiction (HP) est égale à une durée d'au moins 3 orbites successives du satellite.

13. Procédé (100) selon l'une des revendications précédentes, dans lequel une durée de la précédente partie figée (PPF) est égale à une durée de 3 orbites successives du satellite.

14. Satellite comprenant un dispositif de contrôle d'orbite autonome, le dispositif étant configuré pour assurer de manière autonome à bord du satellite une fonction de maintien à poste du satellite et une fonction d'évitement d'une collision du satellite avec au moins un objet spatial, le satellite comprenant :
- un équipement configuré pour activer (101) le dispositif à un instant d'activation
le dispositif comprenant :
- un moyen de détermination d'un plan de manœuvres (PMA) configuré pour garantir le maintien à poste du satellite, le plan de manœuvres (PMA) comprenant au moins une manœuvre (MA1, MA2, MA3), l'au moins une manœuvre (MA1, MA2, MA3) étant définie pour être mise en œuvre à une date à l'intérieur d'un horizon de prédiction (HP) du plan de manœuvres (PMA), l'horizon de prédiction (HP) ayant une durée comprise entre un début de l'horizon de prédiction (HP) correspondant à l'instant d'activation et une fin de l'horizon de prédiction (HP), le plan de manœuvres (PMA) étant déterminé par ledit moyen de détermination à partir d'un précédent plan de manœuvres (PPMA) comprenant au moins une précédente manœuvre (PM1, PM2, PM3), l'au moins une précédente manœuvre (PM1, PM2, PM3) étant définie pour être mise en œuvre à une date à l'intérieur d'un précédent horizon de prédiction (PHP) du précédent plan de manœuvres (PPMA), le précédent horizon de prédiction (PHP) ayant une durée égale à la durée de l'horizon de prédiction (HP), le début de l'horizon de prédiction (HP) étant décalé dans le temps (T) par rapport à un début du précédent horizon de prédiction (PHP), le décalage dans le temps étant égal à un délai d'activation (DA), l'horizon de prédiction (HP) comprenant une partie figée (PF) comprise entre le début de l'horizon de prédiction (HP) et une fin de la première figée (PF), et une partie calculée (PC) comprise entre la fin de la partie figée (PF) et la fin de l'horizon de prédiction (HP), le plan de manœuvres (PMA) étant déterminé par ledit moyen de détermination en fonctior de créneaux autorisés sur l'horizon de prédiction (HP) par un programme de mission, l'au moins une manœuvre (MA1, MA2, MA3) du plan de manœuvres (PMA) comprenant l'au moins une précédente manœuvre (PM1) du précédent plan de manœuvres (PPMA) si l'au moins une précédente manœuvre (PM1) est définie pour être mise en œuvre pendant la partie figée (PF) de l'horizon de prédiction (HP);
- un moyen d'identification d'un risque identifié (RI) de collision avec l'au moins un objet spatial et détermination d'un niveau de risque de collision avec l'au moins un objet spatial ;
- un moyen de vérification si (103') le niveau de risque est inférieur ou égal à un seuil prédéterminé ;
- un moyen transmission configuré pour transmettre le plan de manœuvres (PMA) à un système de commande de propulsion et de contrôle d'attitude du satellite et pour sauvegarder le plan de manœuvres (PMA) de sorte que le plan de manœuvres (PMA) devient le précédent plan de manœuvres (PPMA) si (103') le niveau de risque est inférieur ou égal à un seuil prédéterminé ;
- le moyen de détermination étant configuré, si (103') le niveau de risque est supérieur au seuil prédéterminé, pour déterminer un nouveau plan de manœuvres (NPMA), le nouveau plan de manœuvres (NPMA) comprenant l'au moins une précédente manœuvre (PM1, PM2, PM3) du précédent plan de manœuvres (PPMA) si l'au moins une précédente manœuvre (PM1=NMA1, PM2=NMA2, PM3=NMA3) est définie pour être mise en œuvre à une date à l'intérieur du précédent horizon de prédiction (PHP) et à l'intérieur de l'horizon de prédiction (HP);
- le moyen d'identification étant configuré pour identifier un nouveau risque de collision avec au moins un nouvel objet spatial et pour déterminer un nouveau niveau de risque de collision avec l'au moins un nouvel objet spatial;
- le moyen de vérification étant configuré pour vérifier si (105') le nouveau niveau de risque est inférieur ou égal à un nouveau seuil prédéterminé ;
- le moyen de transmission étant configuré pour transmettre le nouveau plan de manœuvres (NPMA) au système de commande de propulsion et de contrôle d'attitude du satellite et pour sauvegarder le nouveau plan de manœuvres (NPMA) de sorte que le nouveau plan de manœuvres (NPMA) devient le précédent plan de manœuvres (PPMA), si (105') le nouveau niveau de risque est inférieur ou égal à un nouveau seuil prédéterminé:
- le moyen de détermination étant configuré pour déterminer une trajectoire sans manœuvre si (105') le nouveau niveau de risque est supérieur au seuil prédéterminé;
- le moyen d'identification étant configuré pour identifier un autre risque de collision avec au moins un autre objet spatial et pour déterminer un autre niveau de risque de collision avec l'au moins un autre objet spatial;
- le moyen de vérification étant configuré pour vérifier si (107') l'autre niveau de risque est inférieur ou égal à un autre seuil prédéterminé ;
- le moyen transmission étant configuré pour transmettre l'autre plan de manœuvres (APMA) au système de commande de propulsion et de contrôle d'attitude du satellite et pour sauvegarder l'autre plan de manœuvres (APMA) de sorte que l'autre plan de manœuvres (APMA) devient le précédent plan de manœuvres (PPMA), si (107') l'autre niveau de risque est inférieur ou égal à un autre seuil prédéterminé;
- le moyen de détermination étant configuré pour déterminer un plan de manœuvres d'évitement (PME) si (107') le niveau de risque est supérieur à l'autre seuil prédéterminé, le plan de manœuvres d'évitement (PME) comprenant au moins une manœuvre d'évitement pour éviter la collision avec l'autre objet spatial, en utilisant des créneaux prioritaires.
- le moyen de transmission étant configuré pour transmettre le plan de manœuvres d'évitement (PME) au système de commande de propulsion et de contrôle d'attitude du satellite et pour sauvegarder le plan de manœuvres d'évitement (PME) de sorte que le plan de manœuvres d'évitement (PME) et une partie sans manœuvre deviennent le précédent plan de manœuvres (PPMA).

## Patentansprüche

1. Verfahren (100) zur autonomen Umlaufbahnsteuerung eines Satelliten, das an Bord des Satelliten eine Aufrechterhaltung der Position des Satelliten und ein Ausweichen einer Kollision des Satelliten mit mindestens einem Weltraumgegenstand integriert, wobei das Verfahren die folgenden Schritte umfasst:
- Aktivieren (ACOA) des Verfahrens (100) zu einem Aktivierungszeitpunkt;
- Verwenden (101) eines vorherigen Manöverplans (PPMA), der auf einem vorherigen Vorhersagehorizont (PHP) bestimmt wurde, um die Aufrechterhaltung der Position des Satelliten und/oder das Management der Kollisionsrisiken zu gewährleisten, wobei der vorherige Manöverplan (PPMA) mindestens ein vorheriges Manöver (PM1, PM2, PM3) umfasst, wobei das mindestens eine vorherige Manöver (PM1, PM2, PM3) definiert ist, um an einem Datum innerhalb des vorherigen Vorhersagehorizonts (PHP) des vorherigen Manöverplans (PPMA) umgesetzt zu werden, wobei der vorherige Vorhersagehorizont (PHP) einen vorherigen fixierten Teil (PPF) umfasst, der zwischen einem Beginn des vorherigen Vorhersagehorizonts (PHP) und einem Ende des vorherigen fixierten Teils (PPF) liegt, wobei der vorherige Manöverplan (PPMA) einer von einem auf dem vorherigen Vorhersagehorizont (PHP) bestimmten Manöverplan (PMA), einem auf dem vorherigen Vorhersagehorizont (PHP) bestimmten neuen Manöverplan (NPMA) und einem auf dem vorherigen Vorhersagehorizont (PHP) bestimmten anderen Manöverplan (APMA) oder dem vorherige Manöverplan ist, der einen Ausweichmanöverplan (PME) umfasst, der auf einem vorherigen Ausweichhorizont (PHE) bestimmt wurde, **dadurch gekennzeichnet, dass** das Verfahren die folgenden Schritte umfasst:
- wenn (101') der vorherige Manöverplan (PPMA) einen Ausweichmanöverplan (PME) umfasst, der auf einem vorherigen Ausweichhorizont PHE bestimmt wurde, und wenn ein Ende des vorherigen Ausweichhorizonts PHE vor dem Ende des vorherigen festen Teils (PPF) liegt, oder wenn der vorherige Manöverplan (PPMA) kein Ausweichmanöverplan (PME) ist, werden die folgenden Schritte durchgeführt:
- Bestimmen (102) eines Manöverplans (PMA) auf einem Vorhersagehorizont (HP), um die Aufrechterhaltung der Position des Satelliten zu gewährleisten, wobei der Manöverplan (PMA) mindestens ein vorheriges Manöver (PM1) des vorherigen Manöverplans (PPMA) umfasst, wenn er nicht leer ist, wenn das mindestens eine vorherige Manöver (PM1=MA1) definiert ist, um an einem Datum innerhalb des vorherigen festen Teils (PPF) und innerhalb des Vorhersagehorizonts (HP) des Manöverplans (PMA) umgesetzt zu werden, wobei der Vorhersagehorizont (HP) eine Dauer aufweist, die gleich der Dauer des vorherigen Vorhersagehorizonts (PHP) ist, wobei ein Beginn des Vorhersagehorizonts (HP) gegenüber dem Beginn des vorherigen Vorhersagehorizonts (PHP) zeitlich versetzt (T) ist, wobei die zeitliche Verschiebung gleich einer Aktivierungszeit (DA) ist, wobei der Manöverplan (PMA) ferner, wenn er nicht leer, mindestens ein Manöver (MA2, MA3) umfasst, wobei das mindestens eine Manöver (MA2, MA3) definiert ist, um während eines berechneten Teils (PC) des Vorhersagehorizonts zwischen dem Ende des vorherigen festen Teils (PPF) und dem Ende des Vorhersagehorizonts (HP) umgesetzt zu werden, wobei der Manöverplan (PMA) in Abhängigkeit von den auf dem Vorhersagehorizont (HP) durch ein Satellitenmissionsprogramm zugelassenen Zeitfenstern bestimmt wird;
- Identifizieren (103), für eine Flugbahn, die einer Ausführung des bestimmten Manöverplans (PMA) entspricht, eines identifizierten Kollisionsrisikos (RI) mit dem mindestens einen Weltraumgegenstand und Bestimmen eines Kollisionsrisikoniveaus mit dem mindestens einen Weltraumgegenstand;
- wenn (103') das Risikoniveau kleiner oder gleich einem vorbestimmten Schwellenwert ist, Übertragen (109) des Manöverplans (PMA) an ein Satelliten-Antriebssteuerungs- und -Lageregelungssystem zur Ausführung der Manöver des vorherigen festen Teils (PPF), wobei der Übertragungsschritt (109) einen Speicherschritt (109') umfasst, wobei der Manöverplan (PMA) zu dem vorherigen Manöverplan (PPMA) wird;
- wenn (103') das Risikoniveau größer ist als der vorbestimmte Schwellenwert:
- Bestimmen (104) eines neuen Manöverplans (NPMA) auf dem Vorhersagehorizont (HP), um die Aufrechterhaltung der Position des Satelliten zu gewährleisten, wobei der neue Manöverplan (NPMA) mindestens ein vorheriges Manöver (PM1, PM2, PM3) des vorherigen Manöverplans (PPMA) umfasst, wenn das mindestens eine vorherige Manöver (PM1=NMA1, PM2=NMA2, PM3=NMA3) definiert ist, um an einem Datum innerhalb des vorherigen Vorhersagehorizonts (PHP) und innerhalb des Vorhersagehorizonts (HP) des neuen Manöverplans (NPMA) umgesetzt zu werden, wobei der neue Manöverplan (NPMA) ferner mindestens ein neues Manöver (NMA4) umfasst, wobei das mindestens neue Manöver (NMA4) definiert ist, um auf einem berechneten neuen Teil (NPC) des Vorhersagehorizonts (HP) zwischen dem Ende des vorherigen Manöverplans (PPMA) und dem Ende des Vorhersagehorizonts (HP) umgesetzt zu werden, wobei der neue Manöverplan (NPMA) in Abhängigkeit von den auf dem Vorhersagehorizont (HP) durch ein vorheriges Satellitenmissionsprogramm zugelassenen Zeitfenstern bestimmt wird;
- Identifizieren (105), für eine neue Flugbahn, die einer Ausführung des bestimmten neuen Manöverplans (NPMA) entspricht, eines identifizierten Kollisionsrisikos mit dem mindestens einen neuen Weltraumgegenstand und Bestimmen eines neuen Kollisionsrisikoniveaus mit dem mindestens einen neuen Weltraumgegenstand, wobei der mindestens eine neue Gegenstand und der mindestens eine Gegenstand identisch sein können;
- wenn (105') das Risikoniveau kleiner oder gleich einem neuen vorbestimmten Schwellenwert ist, Übertragen (110) des neuen Manöverplans (NPMA) an das Satelliten-Antriebssteuerungs- und -Lageregelungssystem zur Ausführung der Manöver des vorherigen festen Teils (PPF), wobei der Übertragungsschritt (110) einen Speicherschritt (110') umfasst, wobei der neue Manöverplan (NPMA) zu dem vorherigen Manöverplan (PPMA) wird;
- Aktivieren des Verfahrens (100) mindestens einmal zu einem nachfolgenden Aktivierungszeitpunkt, wobei der nachfolgende Aktivierungszeitpunkt der um die Aktivierungsverzögerung versetzte Aktivierungszeitpunkt ist.

2. Verfahren (100) nach dem vorhergehenden Anspruch, ferner umfassend die folgenden Schritte, wenn (105') das neue Risikoniveau größer ist als der vorbestimmte Schwellenwert:
- Bestimmen (106) eines anderen Manöverplans (APMA) auf dem Vorhersagehorizont (HP), wobei der andere Manöverplan (APMA) nur das mindestens eine vorherige Manöver (PM1) des vorherigen Manöverplans (PPMA) umfasst, wenn das mindestens eine vorherige Manöver (PM1) definiert ist, um an einem Datum innerhalb des vorherigen festen Teils (PPF) und innerhalb des Vorhersagehorizonts (HP) des anderen Manöverplans (APMA) umgesetzt zu werden, wobei der andere Manöverplan (APMA) kein Manöver umfasst, wenn das mindestens eine vorherige Manöver (PM1) nicht definiert ist, um während des vorherigen festen Teils (PPF) und innerhalb des Vorhersagehorizonts (PHP) umgesetzt zu werden;
- Identifizieren (107), für eine andere Flugbahn, die einer Ausführung des anderen Manöverplans (APMA) entspricht, eines identifizierten anderen Kollisionsrisikos mit mindestens einem anderen Weltraumgegenstand und Bestimmen eines anderen Kollisionsrisikoniveaus mit dem mindestens einen neuen Weltraumgegenstand, wobei der mindestens eine andere Gegenstand und der mindestens eine Gegenstand identisch sein können;
- wenn (107') das andere Risikoniveau kleiner oder gleich einem anderen vorbestimmten Schwellenwert ist, Übertragen (111) des anderen Manöverplans (APMA) an das Satelliten-Antriebssteuerungs- und -Lageregelungssystem zur Ausführung der Manöver des vorherigen festen Teils (PPF), wobei der Übertragungsschritt (111) einen Speicherschritt (111') umfasst, wobei der andere Manöverplan (APMA) zu dem vorherigen Manöverplan (PPMA) wird;

3. Verfahren (100) nach dem vorhergehenden Anspruch, ferner umfassend die folgenden Schritte, wenn (107') das andere Risikoniveau größer ist als der andere vorbestimmte Schwellenwert:
- Bestimmen (108) eines Ausweichmanöverplans auf einem Ausweichhorizont (HE), wobei der Ausweichmanöverplan (PME) das mindestens eine vorherige Manöver (PM1) des vorherigen Manöverplans (PPMA) umfasst, wenn das mindestens eine vorherige Manöver (PM1) definiert ist, um während des vorherigen festen Teils (PPF) des vorherigen Vorhersagehorizonts (PHP) umgesetzt zu werden, wobei der Ausweichmanöverplan (PME) ferner mindestens ein Ausweichmanöver (MAE2) umfasst, um der Kollision mit dem anderen Weltraumgegenstand auszuweichen;
- Übertragen (112) des Ausweichmanöverplans (PME) an das Satelliten-Antriebssteuerungs- und -Lageregelungssystem zur Ausführung der Manöver des vorherigen festen Teils (PPF), wobei der Übertragungsschritt (112) einen Speicherschritt (112') umfasst, wobei der Ausweichmanöverplan (PME) und ein Teil ohne Manöver zwischen einem Ende des Ausweichhorizonts und dem Ende des Vorhersagehorizonts HP zusammen zu dem vorherigen Manöverplan (PPMA) werden.

4. Verfahren (100) nach dem vorhergehenden Anspruch, wobei der Ausweichmanöverplan (PME) unter Verwendung der durch das Satellitenmissionsprogramm zugelassenen vorrangigen Zeitfenstern bestimmt wird.

5. Verfahren (100) nach einem der vorhergehenden Ansprüche, wobei ein Beginn des Ausweichhorizonts mit dem Beginn des Vorhersagehorizonts (HP) zusammenfällt, und wobei ein Ende des Ausweichhorizonts in Abhängigkeit von einem Zeitpunkt der geringsten Annäherung des Satelliten an den anderen Weltraumgegenstand bestimmt wird.

6. Verfahren (100) nach dem vorhergehenden Anspruch, wobei das Ende des Ausweichhorizonts der Zeitpunkt der geringsten Annäherung des Satelliten an den anderen Weltraumgegenstand ist, verlängert um einen vorbestimmten Zeitraum, wobei die für das mindestens eine Ausweichmanöver verwendeten vorrangigen Zeitfenster vor dem Zeitpunkt der geringsten Annäherung des Satelliten an den anderen Weltraumgegenstand positioniert sind, wobei zusätzliche Zeitfenster über den vorbestimmten Zeitraum für zusätzliche Manöver positioniert sind, um eine Rückkehr des Satelliten in eine Referenzumlaufbahn sicherzustellen.

7. Verfahren (100) nach dem vorhergehenden Anspruch, wobei die für das Bestimmen des Ausweichmanöverplans (PME) zugelassenen vorrangigen Zeitfenster in Abhängigkeit von den für den Vorhersagehorizont (HH) durch das Missionsprogramm zugelassenen Zeitfenstern, um die Aufrechterhaltung der Position zu unterstützen, und in Abhängigkeit von durch ein anderes Missionsprogramm, das zu dem Unterstützen des Ausweichens definiert ist, zugelassenen anderen Fenstern bestimmt werden.

8. Verfahren (100) nach dem vorhergehenden Anspruch, wobei die anderen durch das andere Missionsprogramm zugelassenen Zeitfenster die zusätzlichen Zeitfenster umfassen, die für die zusätzlichen Manöver zugelassen sind, die dazu bestimmt sind, die Rückkehr des Satelliten in die Referenzumlaufbahn sicherzustellen.

9. Verfahren (100) nach dem vorhergehenden Anspruch, wobei das nominale Missionsprogramm und das andere Missionsprogramm einen gemeinsamen Wiederaufnahmezeitraum zwischen einem ersten Wiederaufnahmezeitpunkt und einem zweiten Wiederaufnahmezeitpunkt umfassen, wobei die für das Bestimmen des Ausweichmanöverplans (PME) zugewiesenen Zeitfenster die Zeitfenster des anderen Missionsprogramms sind, die in dem Wiederaufnahmezeitraum enthalten sind, und die Zeitfenster des nominalen Missionsprogramms, die nicht in dem Wiederaufnahmezeitraum enthalten sind.

10. Verfahren (100) nach einem der vorhergehenden Ansprüche, ferner umfassend die folgenden Schritte, wenn (101') der vorherige Manöverplan (PPMA), der infolge des Aktivierens (101) des Verfahrens (100) gespeichert wurde, einen Ausweichmanöverplan (PME) umfasst, der auf einem vorherigen Ausweichhorizont (PHE) bestimmt wurde, und wenn das Ende des vorherigen Ausweichhorizonts (PHE) nach dem Ende des vorherigen festen Teils (PPF) des vorherigen Manöverplans (PPMA) liegt:
- Identifizieren (103bis), für eine Flugbahn, die einer Ausführung des bestimmten vorherigen Manöverplans entspricht, eines identifizierten Kollisionsrisikos (RI) mit dem mindestens einen Weltraumgegenstand und Bestimmen eines Kollisionsrisikoniveaus mit dem mindestens einen Weltraumgegenstand;
- Bestimmen (108bis) eines Ausweichmanöverplans (PME) auf einem anderen Ausweichhorizont (AHE);
- Bestimmen (108ter) eines Manöverplans (PMA) auf einem anderen berechneten Teil (APC) des Vorhersagehorizonts (HP), wobei der andere berechnete Teil (APC) zwischen dem Ende des anderen Ausweichhorizonts (AHE) und dem Ende des Vorhersagehorizonts (HP) liegt,
- Übertragen (113) des Ausweichmanöverplans (PME) und des Manöverplans (PMA) an das Satelliten-Antriebssteuerungs- und - Lageregelungssystem zur Ausführung der Manöver des vorherigen festen Teils (PPF), wobei der Übertragungsschritt (113) einen Speicherschritt (113') umfasst, wobei der Ausweichmanöverplan (PME) und der Manöverplan (PMA) zusammen zu dem vorherigen Manöverplan (PPMA) werden.

11. Verfahren (100) nach einem der vorhergehenden Ansprüche, wobei die Aktivierungszeit (DA) gleich einer Dauer einer Umlaufbahn des Satelliten ist.

12. Verfahren (100) nach einem der vorhergehenden Ansprüche, wobei die Dauer des Vorhersagehorizonts (HP) gleich einer Dauer von mindestens 3 aufeinanderfolgenden Umlaufbahnen des Satelliten ist.

13. Verfahren (100) nach einem der vorhergehenden Ansprüche, wobei eine Dauer des vorherigen festen Teils (PPF) gleich einer Dauer von 3 aufeinanderfolgenden Umlaufbahnen des Satelliten ist.

14. Satellit, umfassend eine autonome Umlaufbahnsteuerungsvorrichtung, wobei die Vorrichtung so konfiguriert ist, dass sie an Bord des Satelliten autonom eine Funktion zu dem Aufrechterhalten der Position des Satelliten und eine Funktion zu dem Ausweichen einer Kollision des Satelliten mit mindestens einem Weltraumgegenstand sicherstellt, wobei der Satellit Folgendes umfasst:
- eine Ausrüstung, die so konfiguriert ist, dass sie die Vorrichtung zu einem Aktivierungszeitpunkt aktiviert (101), wobei die Vorrichtung Folgendes umfasst:
- ein Mittel zur Bestimmung eines Manöverplans (PMA), das so konfiguriert ist, dass es die Aufrechterhaltung der Position des Satelliten gewährleistet, wobei der Manöverplan (PMA) mindestens ein Manöver (MA1, MA2, MA3) umfasst, wobei des mindestens eine Manöver (MA1, MA2, MA3) definiert ist, um an einem Datum innerhalb eines Vorhersagehorizonts (HP) des Manöverplans (PMA) umgesetzt zu werden, wobei der Vorhersagehorizont (HP) eine Dauer aufweist, die zwischen einem Beginn des Vorhersagehorizonts (HP), der dem Aktivierungszeitpunkt entspricht, und einem Ende des Vorhersagehorizonts (HP) liegt, wobei der Manöverplan (PMA) durch das Bestimmungsmittel anhand eines vorherigen Manöverplans (PPMA) bestimmt wird, der mindestens ein vorheriges Manöver (PM1, PM2, PM3) umfasst, wobei das mindestens ein vorherige Manöver (PM1, PM2, PM3) definiert ist, um an einem Datum innerhalb eines vorherigen Vorhersagehorizonts (PHP) des vorherigen Manöverplans (PPMA) umgesetzt zu werden, wobei der vorherige Vorhersagehorizont (PHP) eine Dauer aufweist, die gleich der Dauer des Vorhersagehorizonts (HP) ist, wobei der Beginn des Vorhersagehorizonts (HP) im Verhältnis zu einem Beginn des vorherigen Vorhersagehorizonts (PHP) zeitlich verschoben ist, wobei die zeitliche Verschiebung gleich einer Aktivierungszeit (DA) ist, wobei der Vorhersagehorizont (HP) einen festen Teil (PF), der zwischen dem Beginn des Vorhersagehorizonts (HP) und einem Ende des ersten festen Teils (PF) liegt, und einen berechneten Teil (PC) umfasst, der zwischen dem Ende des festen Teils (PF) und dem Ende des Vorhersagehorizonts (HP) liegt, wobei der Manöverplan (PMA) durch das Bestimmungsmittel in Abhängigkeit von den in dem Vorhersagehorizont (HP) durch ein Missionsprogramm zugelassenen Zeitfenstern bestimmt wird, wobei das mindestens eine Manöver (MA1, MA2, MA3) des Manöverplans (PMA) das mindestens eine vorherige Manöver (PM1) des vorherigen Manöverplans (PPMA) umfasst, wenn das mindestens eine vorherige Manöver (PM1) definiert ist, um während des festen Teils (PF) des Vorhersagehorizonts (HP) umgesetzt zu werden;
- ein Mittel zur Identifizierung eines identifizierten Kollisionsrisikos (RI) mit dem mindestens einen Weltraumgegenstand und zur Bestimmung eines Kollisionsrisikoniveaus mit dem mindestens einen Weltraumgegenstand;
- ein Mittel zur Überprüfung, ob (103') das Risikoniveau kleiner oder gleich einem vorbestimmten Schwellenwert ist;
- ein Übertragungsmittel, das so konfiguriert ist, dass es den Manöverplan (PMA) an ein Satelliten-Antriebssteuerungs- und -Lageregelungssystem überträgt und den Manöverplan (PMA) speichert, sodass der Manöverplan (PMA) zu dem vorherigen Manöverplan (PPMA) wird, wenn (103') das Risikoniveau kleiner oder gleich einem vorbestimmten Schwellenwert ist;
- wobei das Bestimmungsmittel so konfiguriert ist, dass es, wenn (103') das Risikoniveau größer ist als der vorbestimmte Schwellenwert, einen neuen Manöverplan (NPMA) bestimmt, wobei der neue Manöverplan (NPMA) das mindestens eine vorherige Manöver (PM1, PM2, PM3) des vorherigen Manöverplans (PPMA) umfasst, wenn das mindestens eine vorherige Manöver (PM1=NMA1, PM2=NMA2, PM3=NMA3) definiert ist, um an einem Datum innerhalb des vorherigen Vorhersagehorizonts (PHP) und innerhalb des Vorhersagehorizonts (HP) umgesetzt zu werden;
- wobei das Identifizierungsmittel so konfiguriert ist, dass es eines neues Kollisionsrisiko mit mindestens einem neuen Weltraumgegenstand identifiziert und ein neues Kollisionsrisikoniveau mit dem mindestens einen neuen Weltraumgegenstand bestimmt;
- wobei das Überprüfungsmittel so konfiguriert ist, dass es prüft, ob (105') das neue Risikoniveau kleiner oder gleich einem neuen vorbestimmten Schwellenwert ist;
- wobei das Übertragungsmittel so konfiguriert ist, dass es den neuen Manöverplan (NPMA) an das Satelliten-Antriebssteuerungs- und - Lageregelungssystem überträgt und den neuen Manöverplan (NPMA) speichert, sodass der neue Manöverplan (NPMA) der vorherige Manöverplan (PPMA) wird, wenn (105') das neue Risikoniveau kleiner oder gleich einem neuen vorbestimmten Schwellenwert ist:
- wobei das Bestimmungsmittel so konfiguriert ist, dass es eine Flugbahn ohne Manöver bestimmt, wenn (105') das neue Risikoniveau größer ist als der vorbestimmte Schwellenwert;
- wobei das Identifizierungsmittel so konfiguriert ist, dass es ein anderes Kollisionsrisiko mit mindestens einem anderen Weltraumgegenstand identifiziert und ein anderes Kollisionsrisikoniveau mit dem mindestens einen anderen Weltraumgegenstand bestimmt;
- wobei das Überprüfungsmittel so konfiguriert ist, dass es überprüft, ob (107') das andere Risikoniveau kleiner oder gleich einem anderen vorbestimmten Schwellenwert ist;
- wobei das Übertragungsmittel so konfiguriert ist, dass es den anderen Manöverplan (APMA) an das Satelliten-Antriebssteuerungs- und - Lageregelungssystem überträgt und den anderen Manöverplan (APMA) speichert, sodass der andere Manöverplan (APMA) der vorherige Manöverplan (PPMA) wird, wenn (107') das andere Risikoniveau kleiner oder gleich einem anderen vorbestimmten Schwellenwert ist;
- wobei das Bestimmungsmittel so konfiguriert ist, dass es einen Ausweichmanöverplan (PME) bestimmt, wenn (107') das Risikoniveau größer ist als der andere vorbestimmte Schwellenwert, wobei der Ausweichmanöverplan (PME) mindestens ein Ausweichmanöver umfasst, um einer Kollision mit dem anderen Weltraumgegenstand unter Verwendung von vorrangigen Zeitfenstern auszuweichen.
- wobei das Übertragungsmittel so konfiguriert ist, dass es den Ausweichmanöverplan (PME) an das Satelliten-Antriebssteuerungs- und - Lageregelungssystem überträgt und den Ausweichmanöverplan (PME) speichert, sodass der Ausweichmanöverplan (PME) und ein Teil ohne Manöver zu dem vorherigen Manöverplan (PPMA) werden.

## Claims

1. A method (100) for autonomous orbit control of a satellite integrating onboard the satellite a station keeping of the satellite and an avoidance of a collision of the satellite with at least one space object, the method comprising the following steps:
- activating (ACOA) the method (100) at an activation time;
- using (101) a previous maneuver plan (PPMA) determined on a previous prediction horizon (PHP) to guarantee the station keeping of the satellite and/or the management of collision risks, the previous maneuver plan (PPMA) comprising at least one previous maneuver (PM1, PM2, PM3), the at least one previous maneuver (PM1, PM2, PM3) being defined to be implemented on a date within the previous prediction horizon (PHP) of the previous maneuver plan (PPMA), the previous prediction horizon (PHP) comprising a previous frozen part (PPF) comprised between a start of the previous prediction horizon (PHP) and an end of the previous frozen part (PPF), the previous maneuver plan (PPMA) being one of a maneuver plan (PMA) determined on the previous prediction horizon (PHP), a new maneuver plan (NPMA) determined on the previous prediction horizon (PHP), another maneuver plan (APMA) determined on the previous prediction horizon (PHP), or the previous maneuver plan comprising an avoidance maneuver plan (PME) determined on a previous avoidance horizon (PHE),
**characterized in that** the method comprises the following steps:
- if (101') the previous maneuver plan (PPMA) comprises an avoidance maneuver plan (PME) determined on a previous avoidance horizon PHE, and if an end of said previous avoidance horizon PHE is prior to the end of the previous frozen part (PPF), or if the previous maneuver plan (PPMA) is not an avoidance maneuver plan (PME), the following steps are implemented:
- determining (102) a maneuver plan (PMA) on a prediction horizon (HP) to guarantee the station keeping of the satellite, said maneuver plan (PMA) comprising at least one previous maneuver (PM1) of the previous maneuver plan (PPMA), when it is not empty, if the at least one previous maneuver (PM1 = MA1) is defined to be implemented on a date within the previous frozen part (PPF) and within the prediction horizon (HP) of the maneuver plan (PMA), the prediction horizon (HP) having a duration equal to the duration of the previous prediction horizon (PHP), a start of the prediction horizon (HP) being shifted in time (T) relative to the start of the previous prediction horizon (PHP), the time shift being equal to an activation delay (DA), the maneuver plan (PMA) further comprising, when it is not empty, at least one maneuver (MA2, MA3), the at least one maneuver (MA2, MA3) being defined to be implemented during a calculated part (PC) of the prediction horizon comprised between the end of the previous frozen part (PPF) and the end of the prediction horizon (HP), the maneuver plan (PMA) being determined based on time slots authorized on the prediction horizon (HP) by a satellite mission program;
- identifying (103), for a trajectory corresponding to an execution of the determined maneuver plan (PMA), an identified risk (RI) of collision with the at least one space object and determining a risk level of collision with the at least one space object;
- if (103') the risk level is less than or equal to a predetermined threshold, transmitting (109) the maneuver plan (PMA) to a system for controlling the propulsion and attitude of the satellite for execution of the maneuvers of the previous frozen part (PPF), the transmission step (109) comprising a backup step (109'), in which the maneuver plan (PMA) becomes the previous maneuver plan (PPMA);
- if (103') the risk level is greater than the predetermined threshold:
- determining (104) a new maneuver plan (NPMA) on the prediction horizon (HP) to guarantee the station keeping of the satellite, said new maneuver plan (NPMA) comprising at least one previous maneuver (PM1, PM2, PM3) of the previous maneuver plan (PPMA), if the at least one previous maneuver (PM1 = NMA1, PM2 = NMA2, PM3 = NMA3) is defined to be implemented on a date within the previous prediction horizon (PHP) and within the prediction horizon (HP) of the new maneuver plan (NPMA), the new maneuver plan (NPMA) further comprising at least one new maneuver (NMA4), the at least one new maneuver (NMA4) being defined to be implemented on a new calculated part (NPC) of the prediction horizon (HP) comprised between the end of the previous maneuver plan (PPMA) and the end of the prediction horizon (HP), the new maneuver plan (NPMA) being determined based on time slots authorized on the prediction horizon (HP) by a previous satellite mission program;
- identifying (105), for a new trajectory corresponding to an execution of the new determined maneuver plan (NPMA), a new identified risk of collision with at least one new space object and determining a new risk level of collision with the at least one new space object, the at least one new object and the at least one object may be identical;
- if (105') the new risk level is less than or equal to a new predetermined threshold, transmitting (110) the new maneuver plan (NPMA) to the system for controlling the propulsion and attitude of the satellite for execution of the maneuvers of the previous frozen part (PPF), the transmission step (110) comprising a backup step (110'), in which the new maneuver plan (NPMA) becomes the previous maneuver plan (PPMA);
- activating the method (100) at least once at a following activation time, the next activation time being the offset activation time of the activation delay.

2. The method (100) according to the preceding claim, further comprising the following steps, if (105') the new risk level is greater than the predetermined threshold:
- determining (106) another maneuver plan (APMA) on the prediction horizon (HP), the other maneuver plan (APMA) comprising only the at least one previous maneuver (PM1) of the previous maneuver plan (PPMA) if the at least one previous maneuver (PM1) is defined to be implemented on a date within the previous frozen part (PPF) and at within the prediction horizon (HP) of said other maneuver plan (APMA), the other maneuver plan (APMA) not comprising any maneuver if the at least one previous maneuver (PM1) is not defined to be implemented during the previous frozen part (PPF) and within the prediction horizon (PHP);
- identifying (107), for another trajectory corresponding to an execution of the other maneuver plan (APMA), another identified risk of collision with at least one other space object and determining another collision level of risk with the at least one other space object, the at least one other space object and the at least one space object may be identical;
- if (107') the other risk level is less than or equal to another predetermined threshold, transmitting (111) the other maneuver plan (APMA) to the system for controlling the propulsion and attitude of the satellite for execution of the maneuvers of the previous frozen part (PPF), the transmission step (111) comprising a backup step (111'), in which the other maneuver plan (APMA) becomes the previous maneuver plan (PPMA).

3. The method (100) according to the preceding claim, further comprising the following steps, if (107') the other risk level is greater than the other predetermined threshold:
- determining (108) an avoidance maneuver plan on an avoidance horizon (HE), the avoidance maneuver plan (PME) comprising the at least one previous maneuver (PM1) of the previous maneuver plan (PPMA) if the at least one previous maneuver (PM1) is defined to be implemented during the previous frozen part (PPE) of the previous prediction horizon (PHP), the avoidance maneuver plan (PME) further comprising at least one avoidance maneuver (MAE2) to avoid collision with the other space object;
- transmitting (112) the avoidance maneuver plan (PME) to the system for controlling the propulsion and attitude of the satellite for execution of the maneuvers of the previous frozen part (PPE), the transmission step (112) comprising a backup step (112'), in which the avoidance maneuver plan (PME) and a part without maneuver comprised between an end of the avoidance horizon and the end of the prediction horizon HP become together the previous maneuver plan (PPMA).

4. The method (100) according to the preceding claim, wherein the avoidance maneuver plan (PME) is determined using priority time slots authorized by the satellite mission program.

5. The method (100) according to any of the preceding claims, wherein a start of the avoidance horizon coincides with the start of the prediction horizon (HP), and wherein an end of the avoidance horizon is determined based on a time of closest approach of the satellite to the other space object.

6. The method (100) according to the preceding claim, wherein the end of the avoidance horizon is the time of closest approach of the satellite to the other space object, increased by a predetermined period of time, the priority time slots used for the at least one avoidance maneuver being positioned before the time of closest approach of the satellite to the other space object, complementary time slots being positioned over the predetermined period of time for complementary maneuvers intended to ensure a return of the satellite to a reference orbit.

7. The method (100) according to the preceding claim, wherein the priority time slots authorized for determining the avoidance maneuver plan (PME) are determined based on the time slots authorized on the prediction horizon (HP) by the mission program for promote the station keeping and based on other time slots authorized by another mission program defined to promote the avoidance.

8. The method (100) according to the preceding claim, wherein the other time slots authorized by the other mission program comprise the complementary time slots authorized for the complementary maneuvers intended to ensure the return of the satellite to the reference orbit.

9. The method (100) according to the preceding claim, wherein the nominal mission program and the other mission program comprise a common recovery period comprised between a first recovery time and a second recovery time, the time slots allocated for determining the avoidance maneuver plan (SME) being the time slots of the other mission program which are comprised in the recovery period, and the time slots of the nominal mission program which are not comprised in the recovery period.

10. The method (100) according to any of the preceding claims, further comprising the following steps, if (101') the previous maneuver plan (PPMA), backed up following activation (101) of the method (100), comprises an avoidance maneuver plan (PME) determined on a previous avoidance horizon (PHE), and if the end of said previous avoidance horizon (PHE) is later than the end of the previous frozen part (PPE) of said previous maneuver plan (PPMA):
- updating (103bis), for a trajectory corresponding to an execution of the previous determined maneuver plan, an identified risk (RI) of collision with the at least one space object and determining a risk level of collision with the at least one space object;
- determining (108bis) an avoidance maneuver plan (PME) on another avoidance horizon (AHE);
- determining (108ter) a maneuver plan (PMA) on another calculated part (APC) of the prediction horizon (HP), the other calculated part (APC) being comprised between the end of the other horizon avoidance (AHE) and the end of the prediction horizon (HP),
- transmitting (113) the avoidance maneuver plan (PME) and the maneuver plan (PMA) to the system for controlling the propulsion and attitude of the satellite for execution of the maneuvers of the previous frozen part (PPE), the transmission step (113) comprising a backup step (113'), in which the avoidance maneuver plan (PME) and the maneuver plan (PMA) become together the previous maneuver plan (PPMA).

11. The method (100) according to any of the preceding claims, wherein the activation delay (DA) is equal to a duration of one orbit of the satellite.

12. The method (100) according to any of the preceding claims, wherein the duration of the prediction horizon (HP) is equal to a duration of at least 3 successive orbits of the satellite.

13. The method (100) according to any of the preceding claims, wherein a duration of the previous frozen part (PPF) is equal to a duration of 3 successive orbits of the satellite.

14. A satellite comprising an autonomous orbit control device, the device being configured to autonomously ensure on board the satellite a function of station keeping of the satellite and a function of avoiding a collision of the satellite with at least one space object, the satellite comprising:
- an equipment configured to activate (101) the device at an activation time,
the device comprising:
- a means for determining a maneuver plan (PMA) configured to guarantee station keeping of the satellite, the maneuver plan (PMA) comprising at least one maneuver (MA1, MA2, MA3), the at least one maneuver (MA1, MA2, MA3) being defined to be implemented on a date within a prediction horizon (HP) of the maneuver plan (PMA), the prediction horizon (HP) having a duration comprised between a start of the prediction horizon (HP) corresponding to the activation time and an end of the prediction horizon (HP), the maneuver plan (PMA) being determined by said determination means from a previous maneuver plan (PPMA) comprising at least one previous maneuver (PM1, PM2, PM3), the at least one previous maneuver (PM1, PM2, PM3) being defined to be implemented on a date within a previous prediction horizon (PHP) of the previous maneuver plan (PPMA), the previous prediction horizon (PHP) having a duration equal to the duration of the prediction horizon (HP), the start of the prediction horizon (HP) being shifted in time (T) relative to a start of the previous prediction horizon (PHP), the time shift being equal to an activation delay (DA), the prediction horizon (HP) comprising a frozen part (PF) comprised between the start of the prediction horizon (HP) and an end of the first frozen part (PF), and a calculated part (PC) comprised between the end of the frozen part (PF) and the end of the prediction horizon (HP), the maneuver plan (PMA) being determined by said determination means based on time slots authorized on the prediction horizon (HP) by a mission program, the at least one maneuver (MA1, MA2, MA3) of the maneuver plan (PMA) comprising the at least one previous maneuver (PM1) of the previous maneuver plan (PPMA) if the at least one previous maneuver (PM1) is defined to be implemented during the frozen part (PF) of the prediction horizon (HP);
- a means for identifying an identified risk (RI) of collision with the at least one space object and determining a risk level of collision with the at least one space object;
- a means for verifying whether (103') the risk level is less than or equal to a predetermined threshold;
- a transmission means configured to transmit the maneuver plan (PMA) to a system for controlling the propulsion and attitude of the satellite and to back up the maneuver plan (PMA) so that the maneuver plan (PMA) becomes the previous maneuver plan (PPMA) if (103') the risk level is less than or equal to a predetermined threshold;
- the determination means being configured, if (103') the risk level is greater than the predetermined threshold, to determine a new maneuver plan (NPMA), the new maneuver plan (NPMA) comprising the at least one previous maneuver (PM1, PM2, PM3) of the previous maneuver plan (PPMA) if the at least one previous maneuver (PM1 = NMA1, PM2 = NMA2, PM3 = NMA3) is defined to be implemented on a date within the previous prediction horizon (PHP) and within the prediction horizon (HP);
- the identification means being configured to identify a new risk of collision with at least one new space object and to determine a new risk level of collision with the at least one new space object;
- the verification means being configured to verify whether (105') the new risk level is less than or equal to a new predetermined threshold;
- the transmission means being configured to transmit the new maneuver plan (NPMA) to the system for controlling the propulsion and attitude of the satellite and to back up the new maneuver plan (NPMA) so that the new maneuver plan (NPMA) becomes the previous maneuver plan (PPMA), if (105') the new risk level is less than or equal to a new predetermined threshold;
- the determination means being configured to determine a trajectory without maneuvering if (105') the new risk level is greater than the predetermined threshold;
- the identification means being configured to identify another risk of collision with at least one other space object and to determine another risk level of collision with the at least one other space object;
- the verification means being configured to verify whether (107') the other risk level is less than or equal to another predetermined threshold;
- the transmission means being configured to transmit the other maneuver plan (APMA) to the system for controlling the propulsion and attitude of the satellite and to back up the other maneuver plan (APMA) so that the other maneuver plan (APMA) becomes the previous maneuver plan (PPMA), if (107') the other risk level is less than or equal to another predetermined threshold;
- the determination means being configured to determine an avoidance maneuver plan (PME) if (107') the risk level is greater than the other predetermined threshold, the avoidance maneuver plan (PME) comprising at least one avoidance maneuver to avoid the collision with the other space object, using priority time slots.
- the transmission means being configured to transmit the avoidance maneuver plan (PME) to the system for controlling the propulsion and attitude of the satellite and to back up the avoidance maneuver plan (PME) so that the avoidance maneuver plan (PME) and a part without maneuver become the previous maneuver plan (PPMA).
